# EUROPEAN PATENT SPECIFICATION

(11) **EP 4 652 059 B1**
(45) Date of publication and mention of the grant of the patent: **20.05.2026**
(21) Application number: 25709835.0
(22) Date of filing: 05.02.2025
(51) Int. Cl.: B60K 28/06, B60W 50/14, B60H 1/00, B60W 40/08

(54) **IN-VEHICLE THERMAL DISTRESS MITIGATION**
MINDERUNG EINES THERMISCHEN NOTSTANDS IN EINEM FAHRZEUG
ATTÉNUATION DE DÉTRESSE THERMIQUE DANS UN VÉHICULE

(30) Priority: 06.02.2024 US 202463550530 P
(43) Date of publication of application: 26.11.2025
(73) Proprietor: Netradyne, Inc., San Diego, CA 92122 (US)
(72) Inventor: THORNTON, Matthew, San Diego, California 92122 (US); YEDLA, Arvind, San Diego, California 92122 (US); RICHÉ, Philippe, San Diego, California 92122 (US); YANAMALA, Suresh Babu, San Diego, California 92122 (US); DUBLISH, Vivek, San Diego, California 92122 (US); CAMPOS, Michael, San Diego, California 92122 (US)
(74) Representative: Simmons & Simmons
(86) International application number: PCT/US2025/014631
(87) International publication number: WO 2025/171038

(56) References cited:
- WO-A1-2019/161766
- US-A1- 2018 012 089
- US-A1- 2018 111 506
- US-A1- 2021 089 048

## Description

### TECHNICAL FIELD

This invention relates generally to using machine learning techniques for in-vehicle thermal distress mitigation.

### BACKGROUND

Drivers may sometimes drive unsafely or inefficiently. Unsafe driving behavior may endanger the driver and other drivers and may risk damaging the vehicle. Unsafe driving behaviors may also lead to fines. For example, highway patrol officers may issue a citation for speeding. Unsafe driving behavior may also lead to accidents, which may cause physical harm, and which may, in turn, lead to an increase in insurance rates for operating a vehicle. Inefficient driving, which may include hard accelerations, may increase the costs associated with operating a vehicle.

One aspect of driving that may lead to unsafe driving is when drivers experience heat distress. Heat distress may be a significant concern for individuals whose occupation requires them to spend extended periods in their vehicle, such as delivery drivers, truck drivers, and taxi drivers. One example of heat distress is a heat stroke, which is a severe form of hyperthermia that occurs when a person's body temperature rises to dangerous levels. In a vehicle, particularly when it is parked under direct sunlight, interior temperatures can rapidly increase, creating a risk of heat distress and potentially heat stroke for any occupants remaining inside.

Attempts to address and mitigate heat distress events for drivers have had several limitations. For instance, in-vehicle systems may not accurately determine whether a person is at risk for heat distress, which can cause false alarms. While these alerts are intended to enhance safety by informing the driver that they may be experiencing a heat distress-related event, there is a growing body of evidence suggesting that an excessive number of alerts can have the opposite effect. Specifically, frequent interruptions can lead to cognitive overload, where the driver's ability to process information efficiently is compromised. This phenomenon, known as "alert fatigue," can desensitize drivers to warnings, potentially leading to critical and accurate thermal distress-related alerts, or any other types of alerts, to be disregarded. Consequently, the effectiveness of safety measures is diminished, and the risk of critical thermal distress-related incidents may increase. WO 2019/161766 A1 discloses a system for determining distress of a driver of a vehicle, comprising a plurality of sensors, including interior vehicle image sensors, an interior vehicle audio sensor, vehicle data sensors, and Global Positioning System (GPS) data sensors.

Systems may attempt to use image processing techniques to detect in-vehicle thermal distress-related events (e.g., instances in which a driver is too hot or too cold for safe driving or otherwise experiencing a temperature related issue affecting the driver's health and/or ability to drive) for automatic alert generation. For example, a computing system located on a vehicle (e.g., operating within or controlling a vehicle) may continuously receive image or video data of the environment inside a vehicle and depicting a driver of the vehicle. The computing system may apply a rules engine or a machine learning algorithm to the images to determine whether to generate an alert indicating the driver is experiencing or is in danger of experiencing a thermal distress-related event. However, given the amount of data that is typically in any single image, and the many nuances in human expression or pose that can impact determinations regarding whether individuals are experiencing thermal distress, the rules engine or machine learning algorithm may not be able to accurately detect thermal distress-related events or otherwise may detect false positives or fail to detect thermal distress-related events. Thus, the computing system may have gaps and not accurately identify thermal distress-related instances for which to generate an in-vehicle alert or message.

### SUMMARY

The invention is defined by the appended claims. A computing device implementing the systems and methods described herein may overcome the aforementioned technical problems using in-vehicle and/or out-of-vehicle context data to determine both when to perform thermal distress-related processing and/or whether to detect the thermal distress-related events. To do so, for example, a computing device of a vehicle can monitor an in-vehicle temperature of the vehicle. The computing device can monitor the in-vehicle temperature using one or more temperature sensors positioned within the vehicle, for example. The computing device can additionally receive, from a camera mounted to or in the vehicle, one or more images depicting the driver of the vehicle. The computing device can receive in-vehicle temperature measurements and/or the images of the driver over time as the driver drives the vehicle. The computing device can iteratively compare the received in-vehicle temperatures to a threshold (e.g., a temperature threshold). Responsive to determining the in-vehicle temperature of the vehicle satisfies the threshold based on one or a defined number of the comparisons, the computing device can execute a machine learning model using one or more of the images depicting the driver (e.g., one or more images depicting the driver within a defined time period before and/or after the time of the temperature measurement that exceeds the threshold) as input. The execution can cause the machine learning model to output an indication that the driver is in a thermal distress state (e.g., a heat exhaustion state, heat stroke state, a hyperthermia state, a hypothermia state, is at risk of entering one such states, etc.). Responsive to determining the driver is in the thermal distress state, the computing device can generate a message in the vehicle requesting driver input. When the computing device determines no affirmative response to the message has been received within a defined time period subsequent to the generation of the message, the computing device can generate a real-time video feed depicting the driver. The computing device can stream or transmit the real-time video feed to a remote computing system to initiate mitigation measures. The computing may additionally or alternatively transmit one or more collected images or videos of the driver depicting the driver in a thermal distress state and/or depicting the driver's response, if any, to the generated message.

In one embodiment, a method for in-vehicle thermal distress mitigation can include monitoring, by one or more processors using one or more temperature sensors, an in-vehicle temperature of a vehicle; receiving, by the one or more processors from a camera mounted to or in the vehicle, one or more images of an environment within the vehicle depicting a driver of the vehicle; responsive to determining the in-vehicle temperature of the vehicle satisfies a temperature threshold, executing, by the one or more processors, a machine learning model using at least the one or more images to detect the driver is in a thermal distress state; responsive to determining the driver is in the thermal distress state, generating, by the one or more processors, a message in the vehicle requesting driver input; and when no affirmative response to the message is received within a defined time period subsequent to the generation of the message, generating, by the one or more processors, a real-time video feed depicting the driver to a remote computing system.

The method can further include determining, by the one or more processors, the vehicle is occupied. Executing the machine learning model using the one or more images can be further responsive to determining the vehicle is occupied. Determining the vehicle is occupied can include determining, by the one or more processors, the vehicle is occupied using one or more occupancy sensors.

The method can further include determining, by the one or more processors, the vehicle has been stationary for at least a defined duration. Executing the machine learning model using the one or more images can be further responsive to determining the vehicle has been stationary for at least the defined duration.

The method can further include determining, by the one or more processors, the vehicle is occupied. Executing the machine learning model using the one or more images can be further responsive to determining the vehicle is occupied and determining the vehicle has been stationary for at least the defined duration.

Executing the machine learning model using at least the one or more images to detect the driver is in the thermal distress state can include generating, by the one or more processors using the machine learning model, a confidence score indicating a likelihood that the driver is in the thermal distress state; and determining, by the one or more processors, the confidence score satisfies a threshold.

The method can further include detecting, by the one or more processors, one or more driver actions over a time period prior to determining the in-vehicle temperature exceeds the temperature threshold. Executing the machine learning model using the one or more images can include executing, by the one or more processors, the machine learning model using the one or more images and identifications of the one or more driver actions over the time period to detect the driver is in the thermal distress state.

Detecting the one or more driver actions over the time period can include detecting the driver taking a drink of a liquid and the driver exiting and reentering the vehicle. Executing the machine learning model using the one or more images can include executing, by the one or more processors, the machine learning model using the one or more images and identifications of a number of instances in which the driver exited and reentered the vehicle within the time period and a number of instances in which the driver drank a liquid within the time period to detect the driver is in the thermal distress state.

The method can further include detecting, by the one or more processors, a change in state of the vehicle from a mobile state to a stationary state. Executing the machine learning model using the one or more images can include executing, by the one or more processors, the machine learning model using the one or more images and an identification of the change in state of the vehicle from the mobile state to the stationary state to detect the driver is in the thermal distress state.

The method can further include detecting, by the one or more processors, an outside air temperature. Executing the machine learning model using the one or more images can include executing, by the one or more processors, the machine learning model using the one or more images and the outside air temperature to detect the driver is in the thermal distress state.

The method can further include, responsive to determining the in-vehicle temperature of the vehicle satisfies the temperature threshold, detecting, by the one or more processors, a state of one or more devices within the vehicle. Executing the machine learning model using the one or more images can include executing, by the one or more processors, the machine learning model using the one or more images and the state of the one or more devices within the vehicle.

Detecting the state of the one or more devices within the vehicle can include detecting an opening state of one or more windows within the vehicle or an activation state of an air conditioning system within the vehicle. Executing the machine learning model using the one or more images can include executing, by the one or more processors, the machine learning model using the one or more images and the opening state of the one or more windows and the activation state of the air conditioning system.

Generating the message can include selecting, by the one or more processors, a pre-recorded audio message from memory; and playing, by the one or more processors, the pre-recorded audio message through a speaker of the vehicle.

Receiving the one or more images can include receiving, by the one or more processors, a sequence of images depicting the driver over time. Executing the machine learning model using the one or more images can include executing, by the one or more processors, the machine learning model using the one or more images based on a change in pose of the driver over the sequence of images.

Receiving the one or more images can include receiving, by the one or more processors, at least one image depicting a facial expression of the driver. Executing the machine learning model using the one or more images can include executing, by the one or more processors, the machine learning model using the one or more images based on the depicted facial expression of the driver.

Executing the machine learning model using the one or more images can include executing, by the one or more processors, the machine learning model using the one or more images generated prior to the generation of the message.

The method can further include receiving, by the one or more processors from the camera mounted to or in the vehicle, second one or more images of the environment within the vehicle depicting the driver of the vehicle; responsive to determining a second in-vehicle temperature of the vehicle satisfies the temperature threshold, executing, by the one or more processors, the machine learning model using at least the one or more second images to detect the driver is in the thermal distress state; responsive to determining the driver is in the thermal distress state, generating, by the one or more processors, a second message in the vehicle requesting driver input; detecting, by the one or more processors, the requested driver input; and pausing, by the one or more processors, monitoring of the in-vehicle temperature for a second defined time period before initiating monitoring the in-vehicle temperature again.

In another embodiment, a system for in-vehicle thermal distress mitigation can include one or more processors configured by instructions stored in memory to monitor, using one or more temperature sensors, an in-vehicle temperature of a vehicle; receive, from a camera mounted to or in the vehicle, one or more images of an environment within the vehicle depicting a driver of the vehicle; responsive to determining the in-vehicle temperature of the vehicle satisfies a temperature threshold, execute a machine learning model using at least the one or more images to detect the driver is in a thermal distress state; responsive to determining the driver is in the thermal distress state, generate a message in the vehicle requesting driver input; and when no affirmative response to the message is received within a defined time period subsequent to the generation of the message, generate a real-time video feed depicting the driver to a remote computing system.

The one or more processors can be further configured to determine the vehicle is occupied. The one or more processors can be configured to execute the machine learning model using the one or more images further responsive to determining the vehicle is occupied. The one or more processors can be configured to determine the vehicle is occupied by determining the vehicle is occupied using one or more occupancy sensors.

These and other aspects and implementations are discussed in detail below. The foregoing information and the following detailed description include illustrative examples of various aspects and implementations, and provide an overview or framework for understanding the nature and character of the claimed aspects and implementations. The drawings provide illustration and a further understanding of the various aspects and implementations, and are incorporated in and constitute a part of this specification. Aspects can be combined and it will be readily appreciated that features described in the context of one aspect of the invention can be combined with other aspects. Aspects can be implemented in any convenient form. For example, by appropriate computer programs, which may be carried on appropriate carrier media (computer-readable media), which may be tangible carrier media (e.g., disks) or intangible carrier media (e.g., communications signals). Aspects may also be implemented using suitable apparatus, which may take the form of programmable computers running computer programs arranged to implement the aspect. As used in the specification and in the claims, the singular form of 'a', 'an', and 'the' include plural referents unless the context clearly dictates otherwise.

### BRIEF DESCRIPTION OF THE DRAWINGS

Non-limiting embodiments of the present disclosure are described by way of example with reference to the accompanying figures, which are schematic and are not intended to be drawn to scale. Unless indicated as representing the background art, the figures represent aspects of the disclosure. For purposes of clarity, not every component may be labeled in every drawing. In the drawings:
**FIG. 1** illustrates an example environment showing a computing system for a thermal distress mitigation driving system, according to an embodiment;
**FIG. 2** illustrates a flowchart of a method for implementing a thermal distress mitigation driving system by adjusting a threshold, according to an embodiment; and
**FIG. 3** illustrates a sequence of images depicting a driver in a thermal distress state, according to an embodiment.

### DETAILED DESCRIPTION

Reference will now be made to the illustrative embodiments depicted in the drawings, and specific language will be used here to describe the same. It will nevertheless be understood that no limitation of the scope of the claims or this disclosure is thereby intended. The illustrative embodiments described in the detailed description are not meant to be limiting of the subject matter presented.

Accurately and consistently detecting driver thermal distress-related events using a computer vision system and machine learning technology can be difficult because the visual and behavioral indicators of heat-related medical distress can be subtle and easily confused with normal driver behaviors. Machine learning models analyzing camera imagery alone may have difficulties distinguishing between a driver who is experiencing early signs of heat exhaustion versus one who is simply tired, warm, or displaying similar-appearing behaviors for benign reasons. This detection challenge is particularly difficult because thermal distress can manifest differently across individuals depicted in training data and/or at inference and the visual cues may be inconsistent or only briefly visible across received images of the driver.

Furthermore, existing computer vision approaches may be complicated by the need to minimize both false positives and false negatives in what could be a life-critical detection system. For instance, a machine learning model may process individual images or short video segments in isolation and/or may lack the contextual awareness to reliably differentiate between concerning and benign behaviors. Accordingly, the machine learning model may potentially miss genuine medical emergencies or generate excessive false alarms that would make the system impractical for real-world deployment or result in "alert fatigue."

To address these technical challenges, a computer or computing device implementing the systems and methods described herein may use in-vehicle and/or out-of-vehicle context data to determine both when to perform thermal distress-related processing and/or whether to detect thermal distress-related events. For example, a computing device of a vehicle may monitor, using one or more temperature sensors, an in-vehicle temperature of the vehicle. The computing device may do so as the driver of the vehicle drives and makes stops to exit and enter the vehicle, such as when the driver is a delivery driver that delivers packages during the day. The computing device may receive one or more images within the same time period. As the computing device receives the in-vehicle temperature measurements, the computing device can compare each of the measurements to a temperature threshold. The computing device can continue the process of receiving in-vehicle temperature measurements and images of the driver of the vehicle until determining at least one in-vehicle temperature measurement exceeds the temperature threshold.

Determining the in-vehicle temperature measurement exceeds or satisfies the temperature threshold can initiate a heat-stress detection and/or mitigation process. For example, responsive to determining the in-vehicle temperature measurement exceeds the threshold, the computing device can identify one or more images depicting the driver. The computing device can identify the one or more images responsive to determining the one or more images depicting the driver were generated within a time threshold of the time of the generation of the in-vehicle temperature measurement that exceeds the threshold. In some embodiments, the computing device can identify the one or more images further responsive to the vehicle being stationary for a period of time that exceeds a time threshold while the temperature exceeds the threshold. The computing device can input the identified images into a machine learning model trained to detect the thermal distress state of individuals based at least on images of the individuals (e.g., drivers of vehicles). The computing device can execute the machine learning model based at least on the images of the driver, and the machine learning model can output an indication that the driver of the vehicle is in a thermal distress state. By only executing the machine learning model to detect the state of the driver responsive to determining the in-vehicle temperature satisfies the temperature threshold, the computing device can increase the accuracy of the output by the machine learning model because the machine learning model may only be executed when it is more likely that the driver is in an environment in which the driver is more likely to experience a thermal distress-related event. This specific event-driven execution timing can reduce the likelihood of false positive detections of thermal distress-related events, such as detecting thermal distress-related events when the driver is not in an environment in which such events are likely.

Responsive to determining the driver is in the thermal distress state, the computing device can generate a message in the vehicle requesting driver input. The message can be a pre-recorded audio message requesting that the driver make a hand signal, select a virtual button on a display of the vehicle, or select a physical button indicating that the driver is okay or otherwise not experiencing a thermal distress-related event (e.g., is not in the thermal-distress state). After generating the message, the computing device can monitor the driver and/or designated input mechanism or port for an input by the driver. When the driver does not provide an affirmative response to the message (e.g., a requested response or otherwise a response indicating that the driver is okay or not experiencing a thermal distress-related event) within a defined time period subsequent to the generation of the message, the computing device can initiate a response protocol that is intended to mitigate or resolve the thermal distress-related event. The response protocol can be, for example, generating (e.g., encapsulating or compressing) a real-time video feed depicting the driver from images or video received from the camera capturing images or video of the driver and transmitting or providing the real-time video feed to a remote computing system.

The remote computing system can be a computing system of an emergency response team that includes client devices or computing devices that are configured to receive and present such real-time video feeds or/and recorded images or video of the driver exhibiting a thermal-distress state and/or responding to the message. Users at the respective computing devices and client devices can view the real-time video or/and recorded images or video and confirm whether the drivers are experiencing a thermal distress-related event or are in a thermal distress state. In some cases, the remote computing system may be configured to or otherwise store models that are trained to detect a thermal distress-related events. The remote computing system may have more processing resources than the in-vehicle computing device, so the remote computing may be able to confirm more accurately whether a driver is in the thermal distress state. Responsive to the user or the computer model of the remote computing system determining the user is in the thermal distress state, the remote computing system can transmit a message to a third-party system (e.g., a computer system of an emergency responder) identifying the vehicle and/or a global positioning system (GPS) location of the vehicle, in some cases forwarding the real-time video stream or/and recorded images or video depicting the driver to the third-party system. The emergency response team or emergency responder can operate to travel to the vehicle (e.g., based on the GPS data included in the message from the remote computing system) to mitigate or address the situation.

In some cases, to further increase the accuracy of the thermal distress-related the on-vehicle computing device can include in-vehicle and/or out-of-vehicle context. For example, in addition to collecting or receiving images of the driver over time, the computing device can use image processing techniques on the received images to detect different actions that the driver performs. The computing device can detect instances in which the driver exited and then reentered the vehicle and/or drank water. The computing device can maintain a record of such events during the time period in which the driver was driving and include identifications of the events or counters indicating the number of detected instances of such events in the input into the machine learning model with the images of driver that the machine learning model can use to determine whether the driver is in a thermal distress state. Other examples of context that may be included in the input into the machine learning model include a mobility state of the vehicle (e.g., stationary or mobile), a time in which the vehicle has been stationary or mobile, a change in state from the mobile state to the stationary state, or vice versa, an outside air temperature, states of devices within the vehicle (e.g., an opening state of the windows and/or an activated state (e.g., on or off) of the air conditioning system), the in-vehicle temperature exceeding the threshold and/or timeseries data of in-vehicle temperature measurements, etc. The computing device can include a combination of such data in the input with the images of the driver (e.g., in response to determining the in-vehicle temperature exceeds the temperature threshold). The machine learning model can determine the driver is in the thermal distress state based on such inputs with more accuracy than systems that only use images of the driver.

### Thermal Distress Mitigation System

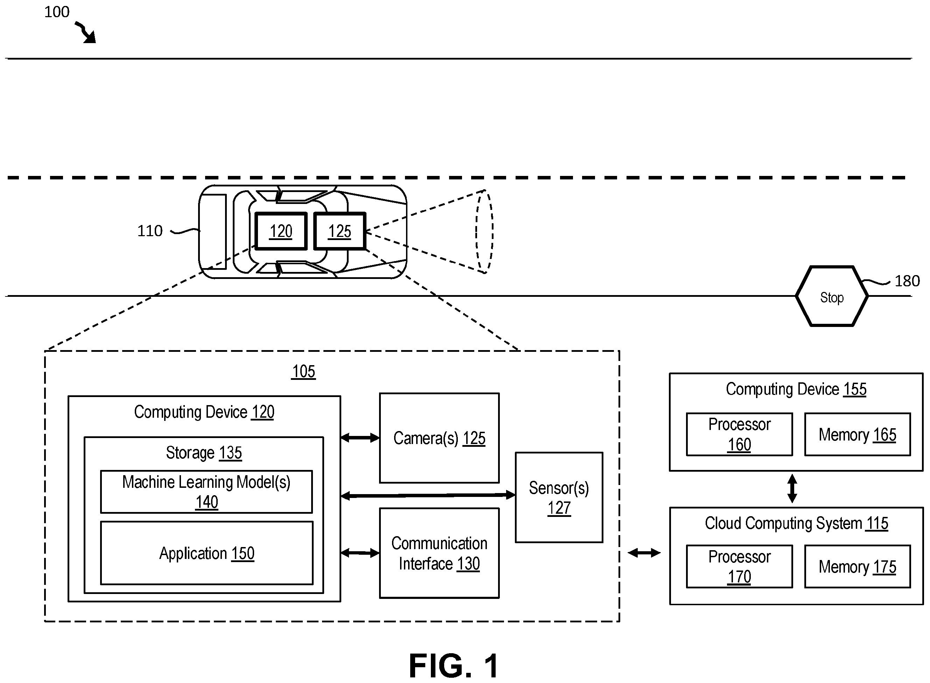

**FIG. 1** depicts an example environment that includes example components of a system in which such a computer can selectively generate alerts in a thermal distress mitigation system. Various other system architectures may include more or fewer features and/or may utilize the techniques described herein to achieve the results and outputs described herein. Therefore, the system depicted in **FIG. 1** is a non-limiting example.

**FIG. 1** illustrates a system **100,** which includes components of a thermal distress mitigation system **105** for using images captured by a camera attached to or integrated on or within a vehicle **110** for alert generation. The system **100** can include the thermal distress mitigation system **105,** the vehicle **110,** and/or a cloud computing system **115.** The thermal distress mitigation system **105** can include a computing device **120,** camera(s) **125,** and/or a communication interface **130.** The thermal distress mitigation system **105** may include an alert device, such as an audio alarm, a warning light, another type of visual indicator, and/or a haptic feedback device (e.g., one or more vibrating seats or a vibrating steering wheel). The thermal distress mitigation system **105** can be mounted on a dashboard, windshield, or other area inside the vehicle **110.** The system **100** is not confined to the components described herein and may include additional or other components, not shown for brevity, which are to be considered within the scope of the embodiments described herein.

The vehicle **110** can be any type of vehicle, such as a car, truck, van, sport-utility-vehicle (SUV), motorcycle, semi-tractor trailer, or other vehicle that can be driven on a road or another environment. The vehicle **110** can be operated by a user, or, in some implementations, can include an autonomous vehicle control system (not pictured) that navigates the vehicle **110** or provides navigation assistance to an operator of the vehicle **110.** The vehicle **110** can be a vehicle of a fleet of vehicles that are owned and/or operated by an entity (e.g., a business or organization) to transport goods, materials, and/or individuals.

The vehicle **110** can include the thermal distress mitigation system **105,** which can be used to detect objects within images captured by the camera(s) **125** when the vehicle is parked and/or as the vehicle is driving down a road and generate alerts or control the vehicle **110** based on the detected objects. As outlined above, the thermal distress mitigation system **105** can include the computing device **120.** The computing device **120** can be mounted on or in the vehicle **110.** In some cases, the computing device **120** is a computing device that automatically controls the vehicle for self-driving or generates audible or visual alerts via devices within the vehicle **110.**

The computing device **120** can include the storage **135,** which can store images and/or video captured by the camera(s) **125,** machine learning model(s) **140,** and an application **150.** The storage **135** can be a computer-readable memory that can store or maintain any of the information described herein that is generated, accessed, received, transmitted, or otherwise processed by the computing device **120.** The storage **135** can maintain one or more data structures, which may contain, index, or otherwise store each of the values, pluralities, sets, variables, vectors, numbers, or thresholds described herein. The storage **135** can be accessed using one or more memory addresses, index values, or identifiers of any item, structure, or region of memory maintained by the storage **135.**

The storage **135** may be internal to the computing device **120** or may exist externally to the computing device **120** and accessed via a suitable bus or interface. In some implementations, the storage **135** can be distributed across many different storage elements. The computing device **120** (or any components thereof) can store, in one or more regions of the memory of the storage **135,** the results of any or all computations, determinations, selections, identifications, generations, constructions, or calculations in one or more data structures indexed or identified with appropriate values.

The computing device **120** can include or be in communication with a communication interface **130** that can communicate wirelessly with other devices. The communication interface **130** of the computing device **120** can include, for example, a Bluetooth communications device, a Wi-Fi communication device, or a 5G/LTE/3G cellular data communications device. The communication interface **130** can be used, for example, to transmit any information described herein to the cloud computing system **115,** including images and/or videos that the computing device **120** receives from the camera(s) **125.** The communication interface **130** can also be used, for example, to receive indications of driving events that the processor detects from the images or videos, in some cases with the images or videos from which the processor detects the driving events.

The thermal distress mitigation system **105** can include sensor(s) **127.** The sensor(s) **127** can include sensors that are configured to detect different aspects and/or states of the vehicle **110.** The sensor(s) **127** can include one or more occupancy sensors configured to detect whether individuals (in some cases, specifically a driver) are physically in the vehicle **110.** The sensor(s) **127** can include one or more temperature sensors that are configured to detect the current temperature within the vehicle **110** (e.g., the in-vehicle temperature), such as in a cabin of the vehicle **110.** The sensor(s) **127** can include outside air temperature sensors that are configured to detect the current temperature outside of the vehicle **110** (e.g., the out-of-vehicle temperature). The sensor(s) **127** can include one or more global positioning system (GPS) sensors configured to determine or identify the location of the vehicle **110.** The sensor(s) **127** can include sensors that are configured to detect or measure any aspect or point inside of the vehicle **110** and/or outside of the vehicle **110.**

The sensor(s) **127** can respectively generate measurements that the sensor(s) **127** are configured to generate and transmit the measurements to the computing device **120.** The sensor(s) **127** can do so at set time intervals, pseudo-randomly, and/or in response to requests from the computing device **120.** The sensor(s) **127** can transmit the measurements with timestamps indicating the times in which the measurements were generated and/or the times in which the sensor(s) **127** transmitted the measurements to the computing device **120.** In some cases, the computing device **120** can generate timestamps for the measurements indicating the times in which the computing device **120** received the measurements.

The camera(s) **125** can include any type of camera or multiple cameras that are capable of capturing images or videos of the environment surrounding the vehicle **110** and/or within the vehicle **110,** including a configuration having an external camera view of the surrounding environment and a cabin-facing camera view of the driver. The camera(s) **125** can communicate with the computing device **120** via a vehicle interface, which may include a CAN bus or an on-board diagnostics interface. The camera(s) **125** may periodically capture images or video while the vehicle **110** is turned on and parked and/or as the vehicle **110** is moving. For example, the camera(s) **125** can capture an image or video of a stop sign **180** as the vehicle **110** approaches or passes the stop sign **180.** In another example, the camera(s) **125** can capture an image or video of the driver as the driver is driving, parked, or getting into and/or out of the vehicle **110.** In some cases, the camera(s) **125** can capture images or video when the vehicle **110** is turned off (e.g., when the vehicle is off but in a surveillance mode). The camera(s) **125** may capture images or videos and transmit the images or videos to the computing device **120.** The computing device **120** may receive the images or videos and store images or videos in the storage **135** and/or transmit the images or videos to other vehicles or to the cloud computing system **115.**

The thermal distress mitigation system **105** can be configured to determine whether a driver of the vehicle **110** is in a thermal distress state (e.g., a heat exhaustion state, heat stroke state, a hyperthermia state, a hypothermia state, is at high risk of entering one such states, etc.). The thermal distress mitigation system **105** can do so based on images captured by the camera(s) **125** and/or data generated by the sensors **117,** as described herein. For example, the computing device **120** can, through the application **150** (e.g., stored instructions configured to perform processes of the computing device **120**), receive in-vehicle temperature data and/or sensors data indicating the occupancy and/or mobile state of the vehicle **110.** The computing device **120** can execute one of the machine learning model(s) **140** using the received data to generate an output indicating whether or not the driver of the vehicle **110** is in the thermal distress state. In some cases, the thermal distress mitigation system **105** can generate a message or an alert within the vehicle **110** responsive to determining the driver is in the thermal distress state.

The cloud computing system **115** can be or include one or more computing devices that are configured to train and distribute machine learning models (e.g., neural networks, support vector machines, random forests, language models (e.g., transformer models, small language models, large language models, etc.), etc.) to detect thermal distress states in individuals (e.g., drivers) from images and/or context data (e.g., in-vehicle context data and/or out-of-vehicle context data) and/or generate decisions for alert generation. The cloud computing system can include a processor **170** and/or a memory **175.** The cloud computing system **115** may have more processing resources (e.g., more cores, processors, or memory), so the cloud computing system **115** may be more accurate in thermal distress state determinations than in-vehicle thermal distress state determinations. The cloud computing system **115** may receive training sequences of images and/or corresponding context data from computing devices of multiple vehicles and train an individual machine learning model to detect thermal distress states of individuals depicted in images (e.g., individual images and/or sequences of images). The cloud computing system **115** may train one or more machine learning models using such images and/or other context data collected from different vehicles (e.g., vehicles of a fleet of vehicles) and transmitted to the cloud computing system **115** over a network. The cloud computing system **115** can train the machine learning model to do so and transmit the machine learning models (e.g., copies of the machine learning models) to computing devices of vehicles (e.g., the computing device **120**) once the machine learning model or models are sufficiently trained. After transmitting the machine learning models to the computing devices, the cloud computing system **115** can continue to train a local version of the machine learning models with training images and/or context data to improve the machine learning models and/or changes in the cameras that are capturing the images. The cloud computing system **115** can provision the updated models to the computing devices of vehicles after each training iteration and/or at defined time intervals such that the computing devices can continue to use a more accurate machine learning model over time.

The cloud computing system **115** may use parallel processing techniques or have different computers perform different tasks to facilitate the operations described herein. For example, one computer of the cloud computing system **115** can establish connections with the computers of vehicles to receive images and/or context data from thermal distress mitigation systems of the vehicles (e.g., the thermal distress mitigation system **105**), another computer of the cloud computing system **115** can process the received images and/or context data using a machine learning model to detect that individuals depicted in the images are in the thermal distress state and train the machine learning model based on the predictions (e.g., by using backpropagation techniques), and another computer of the cloud computing system **115** can establish connections with different computing devices of vehicles and transmit the trained machine learning model to the different computing devices to use for alert or message generation. Any combination of one or more of the computers of the cloud computing system **115** and/or the thermal distress mitigation system **105** may perform such processes.

A computing device **155** can be a computer that is configured to receive messages and/or present messages or other data on a user interface. The computing device **155** can include a processor **160** and a memory **165.** The computing device **155** can be any type of computing device, such as a mobile phone, laptop computer, desktop computer, smart watch, gaming console, personal data assistant, dashboard computer, or other computing device. A user (e.g., a user associated with the vehicle **110,** such as a fleet manager of a fleet containing the vehicle **110**)**,** can view real-time video feeds (images or video depicting the current state of an environment over time) including videos depicting the driver or drivers of other vehicles responsive to the computing devices within the vehicles detecting the drivers of the vehicles are in a thermal distress-related state.

For example, responsive to detecting a driver is in a thermal distress state and/or determining the driver did not respond to an alert, as described below, the thermal distress mitigation system **105** can generate and/or transmit a real-time video feed or/and recorded images or video from the camera(s) **125** to the cloud computing system **115.** In some cases, the thermal distress mitigation system **105** can transmit GPS data (e.g., location data) generated from the GPS sensor of the sensor(s) **127** to the cloud computing system **115** with the real-time video feed. The computing device **155** can retrieve or request the real-time video feed from the cloud computing system **115** by transmitting a message or a request for the real-time video feed to the cloud computing system **115.** In some cases, the cloud computing system **115** can automatically forward or transmit the real-time video feed to the computing device **155** responsive to receiving the real-time video feed from the vehicle **110.** The user accessing the computing device **155** can view the real-time video feed and determine whether the driver is in the thermal distress state. In some embodiments, one or more images or recorded video(s) of the driver exhibiting the thermal distress state and/or responding to a message may be transmitted to the user in addition to or instead of the real-time video feed, as these may assist the user in understanding the event or the real-time video feed. If the user determines the driver is in the thermal distress state, the user can send (e.g., through the computing device **155** or through another computing device, such as a mobile phone) a message to a third-party computing system, such as a computing system of a first responder or emergency response team. The computing device **155** can forward the real-time video feed to the third-party computing system, in some cases with the GPS data, such that a user of the third-party computing system can view the current state of the driver and determine the next course of action (e.g., whether to dispatch a team or individual to the location of the vehicle **110** or the driver indicated by the GPS data).

In some cases, the cloud computing system **115** (or a different computing system) can operate to validate detected instances in which a driver is in the thermal distress state. For example, responsive to detecting a driver of the vehicle **110** is in the thermal distress state from one or more images generated by the camera(s) **125** and/or context data generated based on images of the driver and/or sensor data generated by the sensors(s) **127,** the thermal distress mitigation system **105** can transmit the images and/or context data from which the thermal distress state was detected to the cloud computing system **115.** The cloud computing system **115** can input the images and/or context into the machine learning model stored in the memory **175** that is trained to detect instances of thermal distress based on such data. The cloud computing system **115** can execute the machine learning model based on the input to cause the machine learning model to output an indication of whether the driver is in the thermal distress state or not. The cloud computing system **115** can transmit the indication to the thermal distress mitigation system **105.** The thermal distress mitigation system **105** may generate a message in the vehicle **110** in response to a validation that the driver is in the thermal distress state by the cloud computing system **115.**

In operation, the camera(s) **125** can generate a plurality of images (e.g., a sequence of images or images of a video) depicting the environment within the vehicle **110.** The camera(s) **125** can capture the individual images of a sequence of images at a defined interval or pseudo-randomly. The camera(s) **125** can transmit or send the images to the computing device **120** responsive to capturing the images and/or in a batch at defined time intervals. The camera(s) **125** can attach timestamps to the individual images as metadata indicating the times in which the camera(s) **125** captured the images and/or the times in which the camera(s) **125** transmitted or sent the images to the computing device **120.** Any number of cameras of the vehicle **110** similar to the camera(s) **125** can transmit such images to the computing device **120** over time as the vehicle **110** is driving or is at rest.

The computing device **120** can receive the images from the camera **125** and process the images to detect instances in which the driver of the vehicle **110** is in a thermal distress state (e.g., experiencing heat exhaustion, heat stroke, hyperthermia, hypothermia, etc.) as depicted in the images. For example, one of the machine learning model(s) **140** (e.g., a neural network, a support vector machine, a random forest, a language model (e.g., transformer model, small language model, large language model, etc.), etc.) can be configured to use image processing techniques (e.g., as a convolutional neural network) to detect objects and/or other features (e.g., colors, tones, contexts, etc.) in individual images and/or across images when using the individual images as input, such as in a sequence. The machine learning model(s) **140** can determine actions performed by the driver over time and/or whether the driver is in the thermal distress state based on such images. For instance, the computing device **120** can execute the machine learning model(s) **140** using each image of a sequence of images as input at once or separately execute the machine learning model **140** for each image of the sequence of images. In each image, the machine learning model **140** can identify or detect the driver, including the driver's facial expression and/or the driver's pose (e.g., body position). The machine learning model **140** can identify any other characteristic or feature of the driver from the images. Based on the facial expression, the driver's pose, and/or any other feature detected from the images (e.g., across the sequence of images or within the individual images), the machine learning model **140** can determine whether or not the driver is in the thermal distress state.

In some cases, when the machine learning model(s) **140** generate an output indicating whether the driver in the thermal distress state, the machine learning model **140** or the application **150** can use a threshold (e.g., a confidence threshold) to determine whether the driver depicted in the images is in the thermal distress state. For example, the machine learning model **140** may include one or more trained or learned weights and/or parameters. The machine learning model **140** can apply the trained or learned weights and/or parameters to the sequence of images to determine a confidence or confidence score that the machine learning model **140** has regarding whether the sequence of images depicts the driver in the thermal distress state. The machine learning model **140** can generate a confidence score indicating a likelihood that the sequence of images depicts the driver in the thermal distress state. The machine learning model **140** or the application **150** can compare the confidence score to the threshold. Responsive to determining a confidence score indicating a likelihood that the driver is in the thermal distress state exceeds or satisfies the threshold, the machine learning model **140** or the application **150** can generate or output an indication that the driver is in the thermal distress state. Otherwise, the machine learning model **140** or the application **150** can generate or output an indication that the driver is not in the thermal distress state. The machine learning model **140** and/or the application **150** can repeat this process for any number of sequences of images over time as the camera(s) **125** transmit images or sequences of images to the computing device **120.** In some cases, the machine learning model **140** and/or the application **150** can repeat the process at set time intervals and/or at a defined interval of images received from the camera(s) **125.**

The application **150** can execute and/or determine when to execute the machine learning model **140.** For example, the application **150** can execute the machine learning model responsive to determining (e.g., only responsive to determining) an in-vehicle temperature of the vehicle **110** exceeds or otherwise satisfies a temperature threshold (e.g., a defined threshold). For instance, the application **150** can receive temperature measurements of the in-vehicle temperature from one or more temperature sensors of the sensors **127.** The application **150** can compare each in-vehicle temperature measurement to the temperature threshold. Responsive to determining at least one in-vehicle temperature measurement exceeds or satisfies the temperature threshold, the application **150** can execute the machine learning model **140** using images depicting the driver and/or any other context data to determine whether the driver is in a thermal distress state.

The machine learning model **140** may be configured or trained to generate indications of whether the driver is in the thermal distress state based on in-vehicle context data and/or out-of-vehicle context data. For example, the application **150** may be configured to generate a feature vector comprising one or more images of the driver or representations (e.g., numerical values representing the pixels of the images depicting the driver) of the images, in-vehicle context data, and/or out-of-vehicle context data. The in-vehicle context data can include the in-vehicle temperature of the vehicle **110** (e.g., the current in-vehicle temperature or the in-vehicle temperature that causes the application **150** to execute the machine learning model **140),** a time-series of in-vehicle temperature data within a defined time period or of a defined duration, the current state of devices within the vehicle **110,** such as the opening state of windows within the vehicle **110** and/or the activation state of the air conditioning system of the vehicle **110,** indications of activities (e.g., instances of exiting and re-entering the vehicle **110** and/or instances of drinking water) performed by the driver prior to (e.g., in the time period leading up to) the determination of the in-vehicle temperature satisfying the threshold (or satisfying the threshold for at least a predetermined period of time), a current mobility state (e.g., driving or stationary) of the vehicle **110,** indications of changes in the mobility state (e.g., transitioning from driving to stopping, or vice versa), etc. The application **150** can determine and/or track the actions by the driver by processing the images received from the cameras(s) **125** using an action detection machine learning model (e.g., a neural network, a random forest, a support vector machine, etc.) trained to detect such actions. The out-of-vehicle context data can be or include the current outside air temperature or a timeseries of the outside air temperature measurements from a time period leading up to the determination of the in-vehicle temperature satisfying the threshold. The application **150** can include any combination or permutation of such in-vehicle context data and/or out-of-vehicle context data in the feature vector with or without the images of the driver. The application **150** can input the feature vector into the machine learning model **140** and execute the machine learning model **140** to cause the machine learning model **140** to output an indication of whether the driver depicted in the vehicle is in the thermal distress state.

The application **150** can generate a message responsive to detecting instances in which the driver of the vehicle **110** is in the thermal distress state. For example, responsive to determining the confidence score that the driver is in the thermal distress state exceeds or satisfies the temperature threshold (e.g., based on the comparison by the application **150** and/or the machine learning model **140**), the application **150** can generate a message within the vehicle **110.** The message can be a request for driver input from the driver. The application **150** can generate the message by generating or playing an audio message (e.g., through a microphone within the vehicle **110**), a visual message (e.g., by activating a template message on a user interface of the vehicle **110**), or a haptic alert (e.g., by activating a haptic device within the vehicle). The audio message and/or the visual message can request the user perform an action (e.g., a defined action indicated in the message), such as making a waving motion, selecting a virtual button on a user interface, speaking a defined set of words, etc. The application **150** can similarly activate such messages for any number of instances that the driver is detected in the thermal distress state.

When the application **150** does not detect or otherwise receive an affirmative response to the message (e.g., the requested input from the driver) within a defined time period subsequent to the generation of the message (or receives a response from the driver in which the driver acknowledges thermal distress), the application **150** can generate a real-time video feed depicting the driver to the cloud computing system **115** (e.g., a remote computing system). For example, the application **150** can determine the driver did not provide the input (e.g., the specific input) requested in the generated message. Responsive to the determination, the application **150** can aggregate or encapsulate images depicting the driver received from the camera(s) **125** as the application **150** receives the images. The application **150** can transmit, forward, and/or stream the aggregated or encapsulated images to the cloud computing system **115** as the application **150** receives, aggregates, and/or encapsulates a real-time video feed or/and recently recorded video of the driver corresponding to a detection of thermal stress and/or a driver's response to a message or lack thereof. The application **150** can stream the real-time video feed to the cloud computing system **115** over time.

In some cases, the application **150** can transmit the GPS data indicating the current location of the vehicle **110** to the cloud computing system **115.** For example, the application **150** can receive GPS data from the sensor(s) **127** indicating the current location of the vehicle **110.** Responsive to determining the driver is in the thermal distress state, the application **150** can transmit or forward the GPS data to the cloud computing system **115** as the application **150** receives the GPS data. Accordingly, the application **150** can forward information identifying the current location of the vehicle **110** to the cloud computing system **115** so individuals know the location of the driver experiencing the thermal distress event.

A user of the computing device **155** can view the real-time video feed. For example, the user can access the real-time video feed through the computing device **155.** The computing device **155** can request the real-time video feed from the cloud computing system **115** and the cloud computing system **115** can forward the real-time video feed to the computing device **155** as the cloud computing system **115** receives the real-time video feed. The user can view the real-time video feed and/or any supporting video or images or metadata on a user interface displayed by the computing device **155.**

The user can determine the next course of action based on the real-time video feed. For example, the user can determine if the driver is in trouble, such as passed out in the vehicle **110.** In such cases, the user can transmit a message to an emergency response team (e.g., emergency responders, such as the police, firemen, or a dedicated group for responding to thermal distress-related events) to cause the emergency response team to travel to the driver. In some cases, the user can transmit the GPS data received with the real-time video feed, or otherwise an indication or identification of the locations of the GPS data, to the emergency response team (e.g., a computing device of the emergency response team). The emergency response team can view the GPS data and travel to the location indicated in the GPS data. In some cases, the user can be a member of the emergency response team and respond based on the data or real-time video feed received from the vehicle **110.**

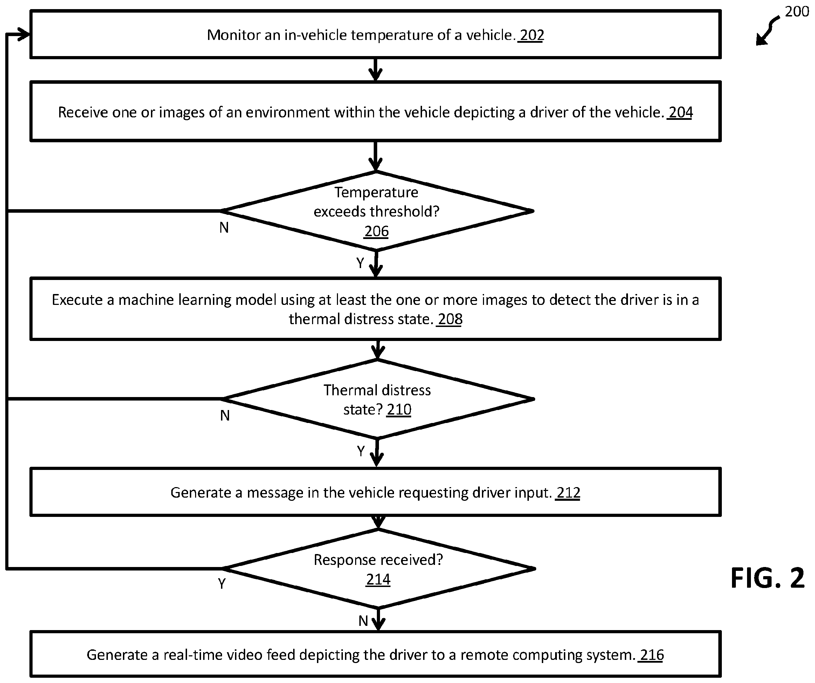

**FIG. 2** illustrates a flow of a method **200** for implementing a thermal distress mitigation system executed by a data processing system, according to some embodiments. The data processing system can be or include a computing system of a vehicle (e.g., the thermal distress mitigation system **105**) and/or a remote computing system (e.g., a cloud server or the cloud computing system **115**) for generating an in-vehicle thermal distress-related message, in accordance with an embodiment. The method **200** is shown to include steps **202-216.** However, other embodiments may include additional or alternative steps, or may omit one or more steps altogether. Different steps can be performed by different computing systems (e.g., the computing system of the vehicle can perform one or more of the steps **202-216** and/or the remote computing system can perform one or more of the steps **202**-**216**) and/or the different computing systems and can operate together to perform individual steps of the steps **202-216.**

In step **202,** the data processing system can monitor an in-vehicle temperature of a vehicle. The data processing system can monitor the in-vehicle temperature of the vehicle using one or more temperature sensors. For example, the data processing system can receive measurements of the in-vehicle temperature (e.g., in Fahrenheit or Celsius) of the vehicle from the temperature sensors over time. The temperature sensors can transmit the in-vehicle temperature measurements to the data processing system at a set time interval, pseudo-randomly, in response to requests from the data processing system, etc. The in-vehicle temperature measurements can be accompanied by timestamps indicating the times in which the in-vehicle temperature measurements were generated and/or transmitted to the data processing system. In some cases, the data processing system can generate a timestamp for each temperature measurement indicating the times in which the data processing system received the temperature measurements. The data processing system can store the in-vehicle temperature measurements and/or the timestamps corresponding to the temperature measurements in memory.

In step **204,** the data processing system can receive one or more images. The one or more images can be or include separately captured images or images of a video (e.g., video data). The images can depict the environment within the vehicle (e.g., images depicting the driver). The images can be consecutively captured images by the same camera. The images can be captured in sequence (e.g., as one or more sequences of images) at a set time interval (e.g., every five seconds) or pseudo-randomly. The data processing system can receive the images from a camera mounted to or within the vehicle (e.g., mounted on the dashboard of the vehicle). The images can be or include a JPEG, RAW, or another image file type. The data processing system can receive the images as a driver is driving the vehicle, when the driver has parked the vehicle, and/or when the vehicle is in a standby mode. The data processing system can receive such images at defined intervals in the case of static standalone images or as the camera streams a video to the data processing system in individual frames. The data processing system can receive the images within the same time period or otherwise as the data processing system receives the in-vehicle temperature measurements.

In some cases, the data processing system can detect or determine actions by the driver (e.g., driver actions) from the images that the data processing system receives from the camera. The data processing system can do so using an action detection machine learning model, for example. The action detection machine learning model can be a neural network, a random forest, a support vector machine, etc., that is configured to detect specific actions by the driver based on images or sequences of images depicting the driver performing the actions. Examples of actions that the action detection machine learning model is configured or trained to detect can include actions of exiting and/or re-entering the vehicle or taking a drink of a liquid (e.g., water). The action detection machine learning model may apply learned weights and/or parameters to sequences of images (e.g., consecutively generated images of a defined number or from a defined time period) to detect such actions performed by the driver in the sequences. For example, as the data processing system receives images from the camera, the data processing system can segment the images into overlapping or non-overlapping sequences of images (e.g., sequences of a defined number of images) received from the camera. The data processing system can organize the images of each sequence into sequential order based on the times in which the images of the sequences were captured. The data processing system can input individual sequences into the action detection machine learning model and separately execute the action detection machine learning model for each sequence of images. Based on the executions, the data processing system can output indications of actions performed by the driver in the respective sequences, such as by detecting instances in which the driver takes a drink or exits and reenters the vehicle.

The data processing system can maintain a record of the number of instances in which the driver performed different actions. For example, the data processing system can maintain a separate counter for each type of action. The data processing system can increment the counters for each respective sequence for which the data processing system identified the actions of the counters. For instance, the data processing system can maintain a counter for the drink of water action. The data processing system can increment the counter for the drink of water action for each sequence of images for which the action detection machine learning model detected the drink of water action. The data processing system can similarly maintain and increment a counter for exiting and re-entering the vehicle. The data processing system can maintain and increment such counters for any number of actions.

The data processing system can maintain a record of the number of detected instances of driver actions in a rolling time window. The rolling time window can have a defined duration, such as one hour, two hours, five hours, 10 hours, etc. For example, the data processing system can maintain a record of each detected instance of an action for which the data processing system incremented a counter. The data processing system can include a timestamp indicating the time (e.g., average or median time) in which the images from each detected action were captured or generated. The data processing system can decrement the counters for the actions over time as the data processing system determines time stamps for the instances of the actions fall out of the rolling time window. Accordingly, the data processing system may avoid using noisy or non-relevant actions by the driver when determining if the driver is in a thermal distress state (e.g., an action indicating the driver exited and reentered the vehicle 10 hours prior to the current time may not have an effect, or at least a strong effect, on whether the driver is currently in the thermal distress state).

In some cases, the data processing system can reset the counters, such as after a defined duration of time. For instance, the data processing system can reset the timers every day. For example, a delivery driver may begin their working day at 8AM. Over the course of the day, the delivery driver may driver and deliver packages at different locations to which the delivery driver drives. For each delivery, the delivery driver may exit the vehicle to deliver a package and return to the vehicle. The data processing system can receive or identify a sequence of images for each such action. The delivery driver may increment a counter for each sequence of images depicting the delivery driver exiting and reentering the vehicle.

Additionally, as the delivery driver drives, the delivery driver may take drinks of water. The data processing system can receive or identify a sequence of images for each drink of water. In some cases, the data processing system may increment a counter for each drink. In some cases, the data processing system can detect a length of the drink or a number of sequences of images (e.g., of a defined duration or of a defined number of images) in which the driver drinks the water. The data processing system can increment the counter based on the length, such as for each sequence of images that captures the drink or as a function of the length (e.g., the length in seconds divided by a variable, such as 2, and round up or down for the increments) of the drink.

The data processing system can reset the counters based on various criteria. For example, the data processing system can reset the counters at defined intervals (e.g., each day) or responsive to determining the delivery driver has not been an occupant of the vehicle for a defined duration of time. For example, the data processing system can determine whether the delivery driver has occupied the vehicle based on images captured of the interior of the vehicle or based on occupancy data indicating the vehicle is vacant or the driver's seat is vacant. By resetting the counters, the data processing system can reduce the amount of irrelevant data that is used to determine whether a driver is in the thermal distress state.

In step **206,** the data processing system can determine whether an in-vehicle temperature measurement satisfies a temperature threshold (e.g., a defined value or temperature). For example, for each in-vehicle temperature measurement that the data processing system receives, the data processing system may compare the in-vehicle temperature measurement to the temperature threshold. Based on the comparison, the data processing system can determine whether the in-vehicle temperature measurement satisfies (e.g., exceeds or is less than) the temperature threshold. For example, if the data processing system is determining, or is configured to determine, whether the driver is in a cold thermal distress state, such as experiencing hypothermia, the data processing system can determine the in-vehicle temperature measurement satisfies the temperature threshold responsive to determining the in-vehicle temperature is less than the threshold. If the data processing system is determining, or is configured to determine, whether the driver is in a hot thermal distress state, such as experiencing heat exhaustion or heat stroke, or is in danger of experiencing heat exhaustion or heat stroke, the data processing system can determine the temperature satisfies the temperature threshold responsive to determining the in-vehicle temperature exceeds the threshold. Responsive to determining the in-vehicle temperature measurement does not satisfy the temperature threshold, the data processing system can return to step 202. The data processing system can repeat this process over time as the data processing system receives in-vehicle temperature measurements.

In response to determining the in-vehicle temperature measurement satisfies the temperature threshold, at step **208,** the data processing system can execute a machine learning model (e.g., a neural network, a support vector machine, a random forest, etc.). The machine learning model may be a thermal distress detection machine learning model trained or configured to process image or video data depicting a driver of a vehicle to determine whether the driver is in a thermal distress state (e.g., hot thermal distress state or a cold thermal distress state). The data processing system can execute the machine learning model using one or more images depicting the driver captured by the camera of the vehicle as input. The data processing system may only do so responsive to determining the in-vehicle temperature measurement satisfies the temperature threshold. Based on the execution, the machine learning model can apply one or more learned weights or parameters to the images depicting the driver to determine or detect that the driver is in the thermal distress state.

Only processing the images for thermal distress detection when the in-vehicle temperature measurement satisfies the temperature threshold has multiple technical advantages. For example, the selective processing may increase the accuracy of the machine learning model in generating output indications of the thermal distress state because the machine learning model may only be executed in scenarios in which such thermal distress states in drivers are likely. The machine learning model may not improperly detect actions indicating the thermal distress state in cases in which the temperature outside is between 10 and 16 degrees Celsius (50 and 60 degrees Fahrenheit), for example. Thus, the machine learning model can avoid causing the data processing system to generate alerts or messages that would result in alert fatigue in the driver. In another example, the selective processing can reduce the processing resources that may be required to detect thermal distress in the driver. Only processing the image data for thermal distress detection when the in-vehicle temperature satisfies the temperature threshold can substantially reduce the number of times or instances in which the data processing system executes the machine learning model, while still maintaining the accuracy of the thermal distress state detections. Additionally, by limiting the image processing of the driver for thermal distress to instances in which the in-vehicle temperature is above the temperature threshold, the data processing system can reduce the amount of time in which image data depicting the occupants of the vehicle, or the driver, is processed, which can increase the driver's privacy.

In one example, as the driver drives the vehicle, a temperature sensor within the vehicle can generate in-vehicle temperature measurements indicating the in-vehicle temperature measurements of the vehicle. The temperature sensor can send the temperature measurements to the data processing system. The data processing system can receive the temperature measurements and compare the temperature measurements to the temperature threshold. The data processing system can do so for each temperature measurement that the temperature sensor generates and transmits until determining or identifying a temperature measurements satisfies the temperature threshold.

In some cases, the data processing system can execute the machine learning model responsive to determining the vehicle is occupied. For example, instead of or in addition to using the thermal threshold and the in-vehicle temperature to determine whether to execute the machine learning model for thermal distress detection, the data processing system can use the occupancy of the vehicle to determine whether to execute the machine learning model. For instance, the data processing system can receive occupancy data from an occupancy sensor of the vehicle indicating whether the vehicle is occupied or whether the driver is in the vehicle (e.g., whether the driver seat is occupied). The data processing system can identify the occupancy data, in some cases in response to determining the in-vehicle temperature satisfies the temperature threshold. Responsive to determining the occupancy data indicates the vehicle is not occupied, the data processing system can return to step **202.** Otherwise, responsive to determining the vehicle is occupied (e.g., the driver's seat is occupied) and/or the in-vehicle temperature satisfies the temperature threshold, the data processing system can execute the machine learning model to determine whether the driver is in the thermal distress state at step **210.** In doing so, the data processing system can avoid processing images of the environment within the vehicle that do not depict the driver or otherwise avoid generating false alerts within the vehicle when the vehicle is not occupied or there is not a driver in the vehicle.

In some cases, the data processing system can execute the machine learning model responsive to determining the vehicle is stationary and/or has been stationary for a defined duration. For example, instead of or in addition to using the in-vehicle temperature and/or the occupancy sensor data to determine whether to execute the machine learning model for thermal distress detection, the data processing system can use the mobile state (e.g., stationary or mobile) of the vehicle to determine whether to execute the machine learning model. For instance, the data processing system can receive data, such as from the CAN bus of the vehicle or from image data captured by one or more cameras of the vehicle, indicating whether the vehicle is currently stationary or moving. The data processing system can determine whether the vehicle is moving (e.g., stationary or mobile) from the received data. The data processing system can track the length of time in which the vehicle is in each state. The data processing system may only execute the machine learning model to determine whether the driver is in the thermal distress state responsive to determining the vehicle has been stationary for at least the defined duration. In doing so, the data processing system may further filter out instances to process the image data to increase the accuracy of the thermal distress states in the driver to instances in which such states are more likely as well as reduce the processing resources that are required to do so.

In some cases, the data processing system can identify the images to use as input into the machine learning model based on timestamps of the images. For example, the data processing system can continuously receive images (e.g., individual images and/or images of a video) depicting the driver from the camera. The individual images can each correspond to a timestamp indicating the time in which the image was generated or captured. The data processing system can identify a timestamp of the in-vehicle temperature measurement that the data processing system determined satisfies the temperature threshold. The data processing system can identify one or more images that correspond to timestamps within a defined time period (e.g., one second, two seconds, 10 seconds, one minute, etc.) prior to the timestamp of the in-vehicle temperature measurement and/or one or more images that correspond to timestamps within a defined time period (e.g., one second, two seconds, 10 seconds, one minute, etc.) subsequent to the timestamp of the in-vehicle temperature measurement. The data processing system can use identified images as input into the machine learning model to detect facial expressions, such as micro-expressions, in individual images or within multiple of the images, changes in facial expression between images, the driver's pose in individual images or between images, and/or changes in pose between the images. The machine learning model may use such features in the input image to detect whether the driver is in the thermal distress state. By using images captured before and/or after the timestamp of the temperature measurement, the data processing system may be able to detect changes in behavior that correlate with the thermal distress state more accurately than by only using a single image at the same timestamp as the in-vehicle temperature measurement. Thus, the machine learning model may more accurately detect when the driver is in the thermal distress state.

For example, responsive to determining an in-vehicle temperature measurement satisfies the temperature threshold, the data processing system can identify images from a time period 10 seconds prior to the timestamp of the in-vehicle temperature measurement and/or from images from a time period 10 seconds after the timestamp of the in-vehicle temperature measurement. The images can depict the driver change poses to a droop his or her shoulders in a slouch and/or his eyes start to glaze over. Each of such changes can indicate the driver is in a thermal distress state in which the driver is overheating. The data processing system can input the identified images into the machine learning model and execute the machine learning model to determine whether the driver is in the thermal distress state.

The data processing system can use in-vehicle or out-of-vehicle context data in addition to or instead of images depicting the driver to determine whether the driver is in the thermal distress state. For instance, the data processing system can use the actions by the driver determined prior to the time of the timestamp of the in-vehicle temperature that satisfies the threshold. For example, the data processing system can use as input into the machine learning model the counts (e.g., the current counts of the counters) of the number of the different types of actions that the driver performed within the state of the moving time window ending at the time of the timestamp of the in-vehicle temperature that satisfies the threshold. The data processing system can input a count of the number of drinks the driver took and/or a count of the number of instances in which the driver exited and reentered the vehicle. In some cases, the machine learning model may determine a higher likelihood of a thermal distress state for a higher count of instances in which the driver exited and left the vehicle. The machine learning model may determine a lower likelihood of a thermal distress state in the driver for a higher count for the number of drinks taken by the driver. The data processing system can input indications or counts of any type of action into the machine learning model to detect thermal distress events.

In another example, the data processing system can additionally or instead include the in-vehicle temperature determined to satisfy the threshold and/or a timeseries of in-vehicle temperature measurements for a defined duration before and/or after the time of the in-vehicle temperature measurement determined to satisfy the threshold. For example, after determining the in-vehicle temperature satisfies the temperature threshold, the data processing system can input the in-vehicle temperature measurement itself into the machine learning model and/or identify a time series of a defined number of in-vehicle temperature measurements before and/or after the in-vehicle temperature measurement and include the timeseries of temperature measurements in the input into the machine learning model. The machine learning model may be more likely to determine the driver is in the thermal distress state the higher the in-vehicle temperature measurement and/or the timeseries of in-vehicle temperature measurements.

In another example, the data processing system can additionally or instead include an indication of the current mobile state of the vehicle in the input into the machine learning model. The current mobile state can be whether the vehicle is currently moving (e.g., mobile) or is stationary. In some cases, the data processing system can track the mobile state of the vehicle over time and include an indication of the length of time in which the vehicle has maintained or been in the current mobile state (e.g., the amount of time the vehicle has been stationary or moving until the current time). In some cases, the data processing system can determine the vehicle recently (e.g., within a time threshold) changed states from a mobile state to a stationary state, or vice versa, based on the stored indications of the mobile state of the driver. The data processing system can include an identification of the change in state or any other state related data in the input into the machine learning model. The machine learning model may be more likely to determine the driver is in the thermal distress state if the vehicle is currently in the stationary state, the longer the driver is in the stationary state (e.g., such as because the sun may be baring down on the vehicle) or if there is a detected change in state (e.g., a change in mobile state may be an indicator of a thermal distress state in the driver).

In another example, the data processing system can include an indication of whether the vehicle is occupied (e.g., whether the driver's seat of the vehicle is occupied) in the input into the machine learning model. For example, the data processing system can receive occupancy data indicating the occupancy of the driver's seat and/or within the vehicle. The data processing system can include a binary value in the input into the machine learning model based on whether the occupancy data indicates if the vehicle is occupied or based on whether the driver's seat is occupied. The machine learning model may be more likely to determine the driver is in the thermal distress state if the vehicle is currently occupied or the driver is currently in the driver's seat. In some cases, the machine learning model may be configured only output an indication of a thermal distress state in the driver if the input occupancy indication is that the driver's seat is occupied.

In another example, the data processing system can additionally or instead include a current outside air temperature measurement and/or a timeseries of outside air temperature measurements for a defined duration before and/or after the time of the in-vehicle temperature measurement determined to satisfy the threshold in the input into the machine learning model. For example, after determining the in-vehicle temperature satisfies the temperature threshold, the data processing system can input a value indicating an outside air temperature measurement itself into the machine learning model and/or identify a time series of a defined number of outside air temperature measurements before and/or after the outside air temperature measurement and include the timeseries of temperature measurements in the input into the machine learning model. The machine learning model may be more likely to determine the driver is in the thermal distress state the higher the outside air temperature measurement and/or the timeseries of outside air temperature measurements.

In another example, the data processing system can include the states of the devices or components within the vehicle in the input into the machine learning model. For example, responsive to determining the in-vehicle temperature of the vehicle satisfies the temperature threshold, the data processing system can detect a state of one or more devices within the vehicle. The one or more devices can be or include the windows and/or the air conditioning system (e.g., heating-ventilation-air conditioning (HVAC) system). The state of the windows can be an opening state indicating whether the windows are open or closed, which may be indicated by a position of the motors of the windows. The state of the air conditioning system can be an activation state indicating whether the air conditioning system is currently running or on and/or a level of air conditioning the air conditioning system is providing. In some cases, the data processing system can include the current opening state of each of the doors of the vehicle or of the doors in total (e.g., the doors may in the open state if at least one or a threshold number of doors is open and/or may be in the closed state otherwise). The data processing system can include the states of the devices of the vehicle in the input into the machine learning model to determine whether the driver is in the thermal distress state. The machine learning model may be more likely to determine the driver is in the thermal distress state if all of the windows are closed, all of the doors are closed, and/or the air conditioning system is not activated to cooling the inside of the vehicle.

Using context data in addition to image data depicting the driver can greatly increase the accuracy of the determinations of whether the driver is in the thermal distress state. For example, given the variation in driver reactions and facial expressions when experiencing a thermal distress event, it can be difficult for the machine learning model to accurately identify features that correspond to a thermal distress state in an individual. By including the context data in the input into the machine learning model with the images of the driver, the machine learning model may take other factors into account that may relate to whether the driver is in the thermal distress state to increase the accuracy of the detection by the machine learning model.

To use the images of the driver, the in-vehicle context data, and/or the out-of-vehicle context data as input into the machine learning model, the data processing system can create or generate a feature vector. The data processing system can include values for the different types of data and insert the values into index values of the feature vector dedicated to the type of data the values (e.g., insert in-vehicle temperature values at a first set of index values of the feature vector and/or occupancy data at a set of index values) represent. The data processing system can input the generated feature vector into the machine learning model and execute the machine learning model based on the input to generate the indication of whether the driver is in the thermal distress state or not.

The data processing system can use a threshold (e.g., a confidence score threshold) to detect that the driver is in the thermal distress state from the images. For example, based on the input, the machine learning model can generate a confidence score indicating the likelihood that the driver is in the thermal distress state (e.g., a hot thermal distress state or a cold thermal distress state). The data processing system or the machine learning model can compare the confidence score to the threshold. The data processing system can detect or determine that the driver is in the thermal distress state responsive to determining the confidence score exceeds or otherwise satisfies the threshold.

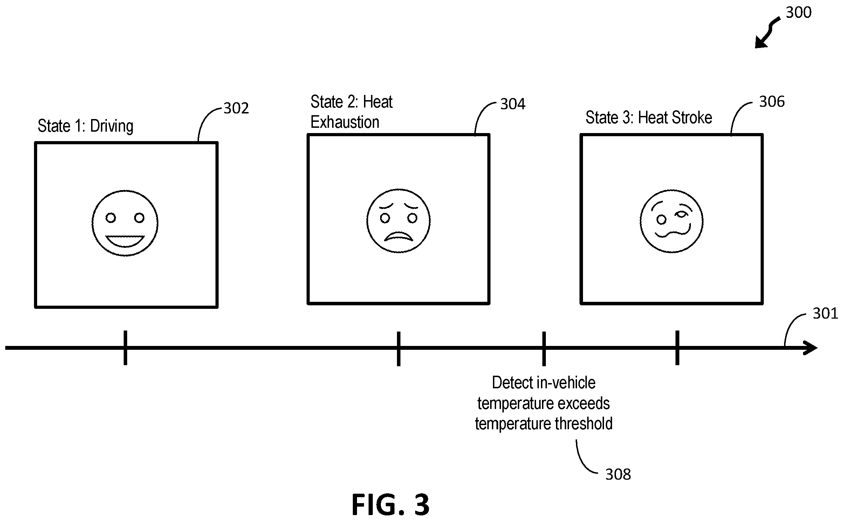

In one example, referring now to **FIG. 3****,** a sequence **300** of images depicting the driver over time is shown. The sequence **300** can include a timeline **301** of images. On the timeline **301,** the sequence **300** can include an initial image **302** depicting the driver's face, an image **304** depicting the driver's face at a time subsequent to the time of the initial image **302,** and/or an image **306** depicting an image of the driver's face at a time subsequent to the time of the image **304.** As depicted in the sequence **300,** the driver's face as depicted in the images **302-306** may gradually change over time as the driver experiences heat-related or thermal-related distress.

For instance, the data processing system can detect an in-vehicle temperature measurement exceeds the temperature threshold at a time **308.** Responsive to the detection, the data processing system can identify the images **302-306** based on the images **302-306** corresponding to timestamps within a defined time period before and/or after the time **308.** The images **302-306** may depict changes in the facial expression and/or features of the driver's face, such as a flushed, red face with hot, dry skin, dilated pupils, glassy or unfocused eyes with a vacant or confused expression, drooping or slack facial muscles (particularly around the mouth), heavy, labored breathing with mouth hanging open, disoriented facial expressions suggesting confusion or agitation, pale or grayish skin tone, etc. The data processing system can input the images **302-306** and execute the machine learning model. Based on the execution, the machine learning model may detect such time-varying features of the driver's face from the input images. The machine learning model may generate an output indicating the driver is in a thermal distress state (e.g., generate a confidence score above the thermal threshold) based on the features.

Referring again to **FIG. 2****,** at step **210,** the data processing system can determine whether the driver is in the thermal distress state. The data processing system can do so by identifying the output of the machine learning model. For example, responsive to identifying an output from the machine learning model indicating the driver is in the thermal distress state, the data processing system can determine the driver is in the thermal distress state. Responsive to identifying an output from the machine learning model indicating the driver is not in the thermal distress state, the data processing system can determine the driver is not in the thermal distress state.

Responsive to determining the driver is not in the thermal distress state, the data processing system can return to step **202.** The data processing system can repeat steps **202-210** over time as the driver drives the vehicle or remains in a stationary vehicle, thus monitoring the health or state of the driver when the interior of the vehicle is too hot or cold (e.g., the in-vehicle temperature satisfies the temperature threshold) and/or the driver is more likely to experience a thermal distress-related event. In some cases, to avoid generating too many alerts, the data processing system may only repeat (e.g., be in the thermal distress state) steps **206-210** within a defined time period or a defined time after determining the driver is not in the thermal distress state. By doing so, the data processing system can avoid using unnecessary processing resources to compare temperature measurements to the temperature threshold and/or execute the machine learning model to determine whether the driver is in the thermal distress state. However, responsive to determining the defined time period subsequent to the initial determination that the driver is not in the thermal distress state is over, the data processing system can repeat steps **206-210.**

Responsive to determining, at step **210,** that the driver is in the thermal distress state, at step **212,** the data processing system can generate a message in or within the vehicle. The message can be an auditory message (e.g., an audio recording), a visual message (e.g., a display on a user interface being displayed in the vehicle, such as on the center console), and/or a haptic message. The message can request for input from the driver. The request can identify a specific type of input for the driver to provide in response to the message. For example, the request can indicate to make a particular arm motion or hand motion, select a virtual button displayed on a user interface, select a physical button within the vehicle, etc. The request can be or include text with instructions to provide the input when the message is a visual message and/or an audible message requesting for the driver to provide the input. In one example, the data processing system can select a pre-recorded audio or audiovisual message from memory requesting an input from the driver. The data processing system can play the pre-recorded audio or audiovisual message through a speaker or microphone of the vehicle and/or a display device of the vehicle. In the case of a haptic message, the data processing system may activate a haptic device within the vehicle.

In some cases, the data processing system can verify the accuracy of a determination that the driver is in the thermal distress state before generating the message in the vehicle. For example, responsive to determining the driver is in the thermal distress state, the data processing system can transmit the data that was input into the machine learning model to detect that the driver is in the thermal distress state to another computing system, such as a cloud computing system that maintains or stores a model that has been trained or configured to detect when drivers are in the thermal distress state. The other computing system may have more processing resources (e.g., more cores, processors, or memory) than the data processing system, so the other computing system may be more accurate in thermal distress state determinations than the data processing system for in-vehicle thermal distress state determinations. The other computing system may provide the input from the data processing system into a computer model (e.g., a machine learning model) stored by the computing system and execute the computer model to determine whether the driver is in the thermal distress state. Responsive to determining the driver is not in the thermal distress state, the computing system can transmit a message or indication to the data processing system indicating not to generate any messages within the vehicle based on the data processing system's detection of the driver in the thermal distress state. Otherwise, the data processing system can transmit a message or instructions to the data processing system that causes the data processing system to generate the message (e.g., the selected audio message requesting that the driver select a virtual button on a user interface) within the vehicle. Accordingly, the other computing system can operate to further reduce the number of false-positive alerts or messages that the data processing system generates in the vehicle for thermal distress determinations.

At step **214,** the data processing system can determine whether an affirmative response to the message has been received. An affirmative response can be a response by the driver indicating that the driver is not in the thermal distress state. For example, an affirmative response can be an action by the driver requested in the generated message or another action that the data processing system is configured to detect as an affirmative response. The data processing system can determine the affirmative response to the message has been received within a defined time period or time duration subsequent to the generation of the message within the vehicle. For example, after the data processing system generates the message within the vehicle, the data processing system can instantiate a timer and increment the timer at a set time interval (e.g., every second). The data processing system can increment the timer for a time period (e.g., a defined time period). The data processing system can monitor the driver's actions during the time period to determine whether the driver performed the requested action from the message or another action that indicates the driver is not experiencing a thermal distress-related event. Responsive to detecting an affirmative response to the message by the driver, the data processing system can return to the step **202.**

The data processing system can detect the affirmative response to the message in one of a few manners. For example, the data processing system can detect the affirmative response by detecting a selection of a virtual button displayed on a user interface of a display within the vehicle or by detecting a selection or input of a physical button within the vehicle. In another example, the data processing system can receive images of the driver after generating the message and the driver can make a gesture or hand motion, such as a thumbs up, that the data processing system can detect using object-recognition techniques. The data processing system can detect the motion or gesture and determine a type of the gesture using the machine learning model configured or trained to make such determinations. The data processing system can compare the type of gesture to a table that stores indications of affirmative responses. In some embodiments, the data processing system may also be configured to recognize gestures that indicate negative responses, such as a thumb's down, which the driver may know can be used to indicate that the driver is experiencing distress, such as thermal distress. Based on the comparison, responsive to determining the type of gesture is included in the table, the data processing system can detect or determine that the driver provided an affirmative response to the message.

In some cases, the data processing system may only determine the driver provided the affirmative response responsive to determining the driver performed the driver input requested in the message. For instance, the data processing system can identify the requested driver input from a mapping of the requested driver input to the message that was generated to the vehicle. The data processing system may only determine the driver provided the affirmative responsive to determining the driver provided the identified driver input. By doing so, the data processing system can avoid detecting unintentional movements by the driver that may occur when the driver is overheated or otherwise in the thermal distress state as affirmative responses.

In some instances, when the data processing system detects the requested driver input, the data processing system can return to the step **202** and repeat steps **202-214.** However, in doing so, the data processing system can pause monitoring of the in-vehicle temperature (e.g., stop receiving or collecting in-vehicle temperature measurements or otherwise stop comparing received in-vehicle temperature measurements to the temperature threshold). The data processing system can pause the monitoring of the in-vehicle temperature for a defined time period (e.g., a second defined time period). Responsive to detecting the end of the defined time period, the data processing system can proceed with performing steps **206-214.** By doing so, the data processing system can avoid overloading the driver with messages that are too frequent after the driver has confirmed the driver is okay or otherwise not in the thermal distress state.

When no affirmative response to the message is received within the defined time period subsequent to the generation of the message, at step **216,** the data processing system can generate a real-time video feed depicting the driver to a remote computing system. For example, responsive to determining the timer has reached the end of the defined time period without the data processing system receiving or detecting an affirmative response to the message from the driver, the data processing system can encapsulate (e.g., package into a structured format that can be transmitted and decoded) images or video data depicting the driver that the data processing system receives from the same camera that captured the images from which the data processing system detected that the driver is within the thermal distress state or from another camera within the vehicle. In some embodiments, the encapsulated images or video data may be or include all or some of the images from which the data processing system detected that the driver is within the thermal distress state. The data processing system can encapsulate the images or video data into data packets. The data processing system can transmit or forward the data packets to the remote computing system as the data processing system receives and encapsulates the images or video data.

In some cases, the data processing system can include global positioning system (GPS) data with the real-time video feed to the remote computing system. For example, the data processing system can collect or identify GPS data from an antenna or another sensor of the vehicle over time. Responsive to determining the driver is in the thermal distress state, the data processing system can transmit GPS data indicating the real-time location of the vehicle to the remote computing system. The data processing system can transmit the GPS data to the remote computing system concurrently with the real-time video feed.

The remote computing system can be a monitoring service or an emergency response system for responding to video feeds of drivers in the thermal distress state. In some cases, the remote computing system may be the same computing system described above as the other computing system that verified whether the driver was in the thermal distress state. In one example, the remote computing system can receive the real-time video feed and/or the GPS data of the vehicle from the data processing system. Responsive to receiving the real-time video feed and/or responsive to a request from a client device connected with the remote computing system, the data processing system can present the real-time video feed at the client device. A user accessing the client device can view the real-time video feed of the driver and determine whether the driver is in the thermal distress state or otherwise in danger. Responsive to determining the driver is in the thermal distress state, the user can dispatch or send an emergency response team to the driver's location, which the user may determine based on the GPS data that is included with the real-time video feed transmitted by the data processing system to the remote computing system. In some cases, the remote computing system can automatically forward or transmit the real-time video feed and/or GPS data to the emergency response team responsive to receiving the real-time video feed and/or GPS data from the vehicle. The emergency response team may evaluate, treat, and/or determine the best course of action to address the current state of the driver.

In a non-limiting example, the data processing system can operate as an in-vehicle device of a vehicle being driven by a delivery driver. The data processing system can receive images depicting the driver delivering packages involving exiting and reentering the vehicle and/or drinking water. The data processing system can keep track of each instance in which the driver exits and reenters the vehicle and/or takes a drink of water. Concurrently, the data processing system can receive temperature measurements indicating the in-vehicle temperature at different points in time of a time period. The data processing system can compare each temperature measurement to a temperature threshold of 35 degrees Celsius (95 degrees Fahrenheit). The data processing system can determine the driver is at risk of overheating or of being in the thermal distress state responsive to identifying an in-vehicle temperature of 37 degrees Celsius (98 degrees Fahrenheit) and determining the measurement is above the 35 degree Celsius (95 degree Fahrenheit) threshold. Other threshold may be used, including pairs of thresholds. For example, the data processing system can determine the driver is at risk of overheating or of being in the thermal distress state responsive to identifying an in-vehicle temperature greater than above 90 series of measurements over a five minute period, and determining that the temperature measurements are each above a 32 degree Celsius (90 degree Fahrenheit) threshold and that the five minute period is meets or exceed a five minute threshold.

Responsive to determining the in-vehicle temperature measurement exceeds the threshold of 35 degrees Celsius (95 degrees Fahrenheit), the data processing system can initiate a thermal distress detection and mitigation process. For example, the data processing system can input one or more images of the driver captured within the previous minute and identifications of the number of instances in which the driver exited and reentered the vehicle and/or took a drink of water within the previous five hours into a machine learning model configured to detect drivers in the thermal distress state. The data processing system can execute the machine learning model based on the input to cause the machine learning model to output an indication that the driver is in the thermal distress state (e.g., experiencing a stroke or overheating).

The data processing system can determine the driver is in the thermal distress state based on the output from the machine learning model and generate an audio alert requesting for the driver to touch or select a virtual button displayed on a user interface within the vehicle. The data processing system can additionally present the virtual button on the user interface (e.g., the user interface of the center console of the vehicle). The data processing system can determine a defined time period of five minutes has passed since the message was generated and played in the vehicle. Responsive to determining the driver has not selected the indicated virtual button or performed any other affirmative response (e.g., a handwave gesture or selection of a physical button within the vehicle) within the five-minute time period, the data processing system can generate a real-time video feed from images or video data depicting the driver and transmit or forward the real-time video feed to a remote computing system of a monitoring service, in some cases with GPS data indicating the location of the vehicle. In some embodiments, the defined time period for a response may be shorter, such as 30 seconds.

A user of the monitoring service can view the real-time video feed and determine whether the driver needs help. When the user determines the driver needs help, the user can dispatch a safety team to the driver's location indicated by the real-time GPS data being streamed to the remote computing system. The safety team can help the driver as needed to address the situation and mitigate the thermal distress being experienced by the driver. In some embodiments, the user may be a more sophisticated and/or resourced computer model operating in a remote environment.

### Example Embodiments

Certain aspects of the present disclosure generally relate to vehicle safety systems, and more particularly to a system that detects heat distress or a potential heat stroke (e.g., a thermal distress state) in a vehicle's occupant and initiates a response protocol. In some cases, the system can be configured to detect cold distress, such as hypothermia, in the vehicle's occupant and initiates the response protocol.

### Systems and methods to mitigate the risk of heat distress for drivers

While there are internal temperature gauges and various systems in existence today that attempt to mitigate the risk of heat distress or heat stroke in vehicles, such systems tend to be focused on back-seat passengers, such as young children or pets, and do not consider the importance of warning a driver of the risk of heat distress that the driver may experience. Perhaps due to this focus on non-driver occupants, existing heat stroke warning systems do not effectively communicate with the person in the vehicle to ascertain their condition, nor do they place a warning to a remote monitoring center in response to a determination that the driver may be experiencing heat-related distress. For systems that are concerned with the driver's safety in particular, a key consideration may be how long the vehicle has been stationary and in a potentially high-heat environment, while the driver is inside the vehicle. For a delivery driver, the vehicle may be stationary while the driver is outside of the vehicle, for example, and, accordingly, the time spent in a high-heat environment may need to be calculated differently to properly account for the delivery driver's activities.

Certain methods described herein also leverage camera image data in novel ways. These include processing imagery of the driver to detect signs of heat distress. These methods also include providing a way for a remote monitor to visually assess the situation, such as by transmission of image data and/or enabling live streaming. Communication of visual data may be crucial in determining the appropriate response in some circumstances.

Certain aspects of the present disclosure provide a comprehensive and effective system to detect potential heat stroke in a vehicle's occupant and initiate a response protocol. The system may include several components that together may create a robust safety solution.

In one embodiment, a system (e.g., the thermal distress mitigation system 105) or method begins by monitoring the vehicle's motion status using a motion sensor. The sensor identifies when the vehicle has been stationary for a predetermined period, which can be configured according to various factors such as ambient temperature, whether the vehicle's doors are opened or closed, and/or the driver's health status. For instance, if the ambient temperature is high, the stationary period could be set to a shorter duration.

In addition to determining that the vehicle has been stationary for the predetermined period, the system may confirm the presence of a driver, for example, by using a seat sensor (e.g., an occupancy sensor), or based on processing of image data captured by a driver-facing camera. This confirmation or check may help avoid false positives when the vehicle is parked with no driver inside. Avoidance of false positives will increase the credibility of such a system, which in turn results in greater efficacy, as downstream systems will be more likely to respond to distress signals.

After confirming the presence of the driver, and after confirming that the driver has either been in the vehicle for the predetermined time and/or that the driver has been active in deliveries (and therefore would be expected to have an elevated body temperature), an audio system within the vehicle may play a pre-recorded message asking the driver to confirm their well-being. The driver is expected to positively acknowledge their status by pressing a button on the device within a certain time frame. This step helps to confirm the driver's status and reduce the chance of a false alarm when a driver is resting during a break.

If the driver does not acknowledge the audio message within the predetermined time frame, the system may send a warning notification to a dispatch center or the driver's manager. This notification informs the relevant parties that the driver may potentially be in distress due to heat distress, or potentially heat stroke.

Along with the warning notification, the system may upload an image or a video of the driver. The video recording, for example, may start from when, or just prior to, the audio message was played or, and may capture the driver's response to the audio message. This video allows the dispatch center or manager to visually assess the driver's condition and the situation inside the vehicle.

The dispatch center or manager may also connect to a live stream from the vehicle to continuously monitor the situation and decide the most appropriate course of action. This could include contacting local emergency services, reaching out to the driver via phone, or sending another employee to check on the driver.

Various embodiments of one or more of the above steps may provide a comprehensive solution that not only detects heat distress or potential heat stroke but also communicates with the driver and initiates a response protocol when appropriate.

### Proactive warnings

Heat stroke is a serious and potentially fatal condition that occurs when the body's temperature regulation system fails, often due to prolonged exposure to or physical exertion in high temperatures. This condition is of particular concern for vehicle operators such as delivery drivers, truck drivers, and other professional drivers who may be exposed to hot temperatures for extended periods. These drivers may face an elevated risk of heat stroke, especially when driving in hot climates, when the vehicle's air conditioning system is not functional, or when the nature of their job requires them to frequently enter and exit their vehicle, thereby exposing them to the external environment.

Traditionally, heat stroke is detected by a thermometer reading or by exhibiting signs of heat stroke such as hot, red, dry or damp skin, rapid and strong pulse, fainting, or loss of consciousness. However, these methods require active monitoring and may not be practical or possible for drivers who are alone or focused on their driving tasks. In addition, since drivers may actually experience heat stroke symptoms while outside of their vehicles, it may be especially important to understand and detect early warning signs using technology and equipment, such as an artificial intelligence-based dash camera (having a driver-facing camera), which may be installed in the driver's vehicle.

Therefore, there is a need for a system that proactively monitors and detects the early signs of heat stroke (which may be termed "heat distress" or a thermal distress state) and provides proactive reminders and warnings to the driver. Proactive warnings may be used in conjunction with elevated response methods that, for example, send alerts to a central system or dispatch for an immediate response when necessary, but such escalations may be avoided altogether with proper risk mitigations.

A heat stroke warning system should also respect the privacy of the driver and only engage in remote monitoring of video recordings or live streaming when a potential distress situation is detected. Proactive warnings are therefore another way of achieving an appropriate balance between driver safety and driver privacy.

In certain embodiments, a proactive warning component is an integral part of a heat stroke prevention and detection system. It is designed to mitigate the risk of drivers reaching a state of heat stroke by providing preventative and proactive reminders and notifications.

In one configuration, at the start of a driver's day, the proactive warning component can deliver an announcement to the driver about the risks of driving in hot conditions. This can be an audio message played on the device or a notification sent to a smartphone application used by the driver. These messages could include reminders to refer to the company's policy when driving in high-heat regions, drink water and take breaks in the shade during the trip, contact dispatch or authorities if any symptoms of heat stroke are experienced, check the functionality of the air conditioning before starting the trip, and ensure there is sufficient water to stay hydrated during the trip. Such messages may be played, for example, when the weather forecast indicates that ambient temperatures are expected to exceed a particular threshold. By playing such a message at the start of a driver's day, the driver may be in a better position to restock the driver's delivery vehicle with water, and the like.

In some embodiments, during the driver's trip, the proactive warning component may monitor the conditions and behaviors of the driver and provides reminders at opportune moments. For example, after detecting that the driver has made several stops or has not been drinking enough water throughout the trip (which may be determined by a neural network capable of detecting that the driver is drinking, for example), a reminder can be sent to the driver at their next stop to take a longer break in the shade and drink water. Similarly, if the in-cabin temperature exceeds a predetermined hot temperature threshold, a warning can be issued to the driver to check the functionality of the air conditioning and take a break in the shade.

A proactive warning component may thus provide an active and ongoing warning system that not only educates drivers about the risk of heat stroke at the start of their day but also monitors their conditions and behaviors throughout the trip to provide timely reminders and warnings. This component plays a role in preventing heat distress by encouraging proactive steps to mitigate the risk and ensuring that drivers are regularly reminded of the importance of staying hydrated, taking breaks, and maintaining a cool in-cabin temperature. The proactive warning component may be modified or suppressed by actual detection of heat distress, as described below.

### Heat Distress detection

A heat distress detection component may be another aspect of the system (or may be a standalone system), designed to monitor drivers and identify signs of heat distress or potential heat stroke, particularly when the vehicle is not in motion. The aim of heat stroke detection is to ensure that drivers who may be experiencing medical distress can alert authorities or dispatch in cases where they may be unable to do so themselves. The aim of heat distress detection may be to encourage the driver to take steps to reduce their heat distress risk and thereby reduce the risk of a more serious heat stroke condition.

In an embodiment, the heat distress detection component initiates an in-cab wellness prompt, where the driver is asked to confirm their wellness status. This can be accomplished by the driver clicking a button (this may be referred to as the driver in-cab wellness acknowledgment). Should the driver fail to confirm their wellness within a pre-set time frame, the system will send a potential distress advisory notification to dispatch or emergency response service. This sequence, which may be referred to as the potential distress check, may be designed to occur only when the vehicle is stationary (which also avoids driver distraction while driving).

If the potential distress check is engaged, and the system issues an advisory potential distress notification, a video from the point of engagement is sent to a central dashboard. This allows dispatch or emergency response to assess the situation, further enhancing the safety measures of the system.

The duration of the stationary period that triggers the heat stroke detection system could be dependent on several factors including the ambient temperature, whether the doors are open, and the angle of incidence of the sun.

Additionally, the system can use the ambient temperature of the vehicle for thermal distress detection. For example, if the ambient temperature is very high (above 90°F (32°C)), a shorter stationary period, (10 minutes), may be appropriate as the temperature inside a parked vehicle can quickly reach dangerous levels.

Additionally, the system can use the opening state of doors of the vehicle for thermal distress detection. For example, whether a door is open or closed may be a factor in determining whether an air-conditioning unit has an opportunity to be effective.

Additionally, the system can use the position of the sun relative to the vehicle for thermal distress detection. For example, heat from the sun may have a more pronounced effect when the sun is directly overhead. Angle of incidence of the sun may be inferred from the time of day and heading direction. In some embodiments, visual detection of direct sun vs. shade may be a factor that is considered in the detection of heat distress.

In general, it may be beneficial for the stationary period to depend on one or more of these and possibly other factors. It may also be helpful to have the system take into account the time of day (as the temperature inside a vehicle can be much hotter when the sun is at its peak) and/or means of determining whether the vehicle is parked in the shade or direct sunlight such as by GPS in reference to a map.

Thresholds at which a safety device in the vehicle will alert the driver may be determined based on a combination of the visual cues detected and other factors such as the vehicle's internal temperature and how long the vehicle has been stationary.

In one example configuration, if the internal temperature of the vehicle exceeds a certain threshold (85°F or 29°C), the system could alert the driver if the driver also shows visual signs of heat distress or heat stroke. If the temperature is extremely high (over 100°F or 38°C), the system might initiate an alert even if the driver shows no obvious signs of heat stroke, due to the high risk associated with these temperatures.

### Privacy considerations

Systems and methods disclosed herein may be configured to respect privacy considerations. These systems and methods may be embodied into a camera safety device, such as a Netradyne ^{®} Driver.i ^{®}. Such a device may offer various privacy modes that activate when the driver is taking a break. For example, if privacy mode is enabled, inward video is not processed or saved. However, given that heat distress or heat stroke may occur while a driver is in a vehicle on a hot day for an extended period of time, the system may incorporate preliminary privacy-override checks that can activate the potential distress check sequence. These checks may include detecting if the vehicle has been stationary for an extended period, or if the in-cabin temperature has risen above a safe level. If either of these conditions is met, the system may exit privacy mode and issue an audio notification to verify the wellness of any occupants. In some embodiments, the privacy mode may remain in effect until a preset time after the audio notification, and only if the driver fails to respond to the wellness check within that time.

In the absence of a privacy mode, or if it has been overridden, the heat distress detection component can trigger the potential distress check based on several conditions. These include the detection of a driver being stationary for a long time, the visual confirmation of a person appearing unconscious, the cabin temperature exceeding a safe limit with a driver present, or the display of visible heatstroke symptoms by the driver.

Because a "live stream" feature may be considered a privacy intrusion when done for an improper reason, the live stream feature may be activated, in accordance with certain aspects of the present disclosure, only under circumstances where there is a significant concern about the well-being of the driver. Examples of such specific situations include (1) no response from driver, if the driver fails to respond to the system's audio message within the designated time frame, the live stream may be activated. This is to allow the dispatch center or manager to visually assess the driver's condition. Similarly, rather than immediately activating a live stream video feed, the driver's failure to respond may cause the system to capture an image frame from the driver-facing camera, and then transmit image frame to the dispatch center or manager. The dispatch center or manager may then escalate to a live stream view based on the content of the image; (2) visual signs of distress, if the system's neural network detects visual cues of heat stroke or other distress, such as extreme facial redness, excessive sweating, disorientation, changes in posture, or slow or slurred speech, the live stream may be activated. As above, a graded response may also be appropriate. Where an image would suffice, such as upon detection of facial redness or changes in posture, a single image or pair of images may be transmitted. Where disorientation is detected, it may be preferable to transmit a short video clip; (3) high internal temperature and or lengthy stationary periods, if the vehicle's internal temperature exceeds a certain threshold, indicating a high risk of heat stroke, the live stream could be activated even if the driver shows no obvious signs of heat stroke. Likewise, if the vehicle has been stationary for an extended period under high ambient temperature, the live stream could be activated to check on the driver's condition. In either of these examples, the escalation would be predicated on the driver being detected as being in the vehicle (which may include that the driver is not currently visible, but has not been detected as having exited the vehicle), and the driver having not responded to a wellness check; and/or (4) emergency situations, in a situation where emergency services have been alerted, the live stream can be activated to provide real-time information about the driver's condition and the situation inside the vehicle.

In each of the above situations, the live stream (or transmitted recent image or video recording) allows for immediate visual assessment and can assist in determining the most appropriate course of action, whether that is contacting the driver, sending help, or alerting emergency services.

To further mitigate privacy concerns, the system could be designed with one or more of the following features: (1) activation warning, before the live stream (or image or video capture) is activated, the system could issue an audio warning to the driver, indicating that the live stream (or image or video capture) will begin unless the driver responds. This activation warning gives the driver a chance to indicate that they are safe or taking a break; and/or (2) access controls, to further protect the driver's privacy, video streams could be encrypted and/or access to the video could be controlled. Only authorized individuals, such as the operations manager or a designated safety officer, would be able to view the video, and only under specific circumstances that suggest the driver may be in distress. For large fleets (or fleets that may engage certain service providers), there may be dedicated specialists who are trained to recognize signs of heat distress. In some embodiments, the heat distress images or video could be routed to or only made accessible to such experts. Upon making a determination that the driver is in distress, the expert could modify the access settings so that other members of a safety team could be engaged.

On hot days, even with privacy mode active, it might be important to continue processing the inward camera stream just to see if the driver is still in the vehicle or has exited the vehicle. That could be accomplished with "sensor mode" type processing while the vehicle parked and the inward camera is off. "Sensor mode" processing may refer to edge computing processing of image sensor data to make inferences, but without storing the image data itself. On hot days (or when risks of heat stroke are particularly elevated), a privacy mode setting may change, so that rather than turning an inward camera off completely, the inward camera instead enters a limited sensor mode. In this mode, the safety device may only be processing image data to detect where the driver is within the vehicle such that the system can keep a timer of how long the driver is in a hot vehicle.

In one embodiment, a system for heat distress mitigation for a driver may include a motion sensor configured to detect whether the vehicle has been stationary for a pre-determined period of time; a seat sensor and/or computer vision system configured to confirm the presence of a driver in the vehicle; and an audio system configured to play a pre-recorded message asking the driver to confirm their well-being.

In one embodiment, an apparatus configured to mitigate risk of heat distress may include a first memory unit; a first at least one processor coupled to the first memory unit, in which the first at least one processor is configured to: detect whether the vehicle has been stationary for a pre-determined period of time; confirm the presence of a driver in the vehicle based on one or more sensors; and play a pre-recorded message asking the driver to confirm their well-being.

In one embodiment not covered by the claims, a computer program product for mitigating risk of heat distress may include a non-transitory computer-readable medium having program code recorded thereon, the program code comprising program code to: detect whether the vehicle has been stationary for a pre-determined period of time; confirm the presence of a driver in the vehicle based on one or more sensors; and play a pre-recorded message asking the driver to confirm their well-being.

In one embodiment, a system for preventing and detecting heat stroke in drivers may include a proactive warning component that delivers reminders and notifications to drivers at the start of and during their driving day (about the risks of heat stroke, hydration, taking breaks, and the functionality of air-conditioning); a detection component that checks if drivers are under medical distress while the vehicle is stopped, initiates an in-cab wellness prompt, receives a driver in-cab wellness acknowledgment, and transmits an advisory potential distress notification sequence in response to a detection of signs of distress; and, optionally, a privacy mode that prevents inward video processing or saving, but can be overridden by preliminary privacy-override checks (for long vehicle stop durations or unsafe in-cabin temperatures).

In one embodiment, the proactive warning component can send reminders after detecting that a driver has made several stops, has not been drinking enough water, or the in-cabin temperature exceeds a hot temperature.

In one embodiment, the detection component may only engage the in-cab wellness prompt, driver in-cab wellness acknowledgment, and advisory potential distress notification sequence when the vehicle is not in motion.

In certain embodiments, the privacy mode can be overridden by preliminary privacy-override checks that do not rely on inward video privacy considerations. The system can include an alert system that sends an advisory potential distress notification to a central dashboard where it can notify dispatch or emergency response, accompanied by a video from the moment the system decided to issue the notification; wherein the alert system sends a video from the time when the in-cab audio message was played along with the advisory potential distress notification.

The system can further include an enablement system that activates the heat stroke prevention/detection mode when the vehicle is turned on and the temperature is above a pre-set threshold within a pre-set radius; wherein the enablement system can be configured to only enter the heat stroke prevention/detection mode if the temperature is above a certain degree within a certain mile radius when the device turns on. The enablement system can be enabled by default for all devices, or only if the temperature is to be above a certain degree.

The detection component can engage the in-cab wellness prompt, driver in-cab wellness acknowledgment, and advisory potential distress notification sequence after detecting that a driver has been stopped for a long duration, a person is passed out, the cabin of the vehicle has exceeded an unsafe temperature and the driver is in the cabin, and/or a person has visible characteristics of heat stroke. The proactive warning component can send notifications to a smartphone application for the driver. The alert system can allow the dispatch/manager to review the situation by connecting to the device with a live stream capability.

The heat distress stroke detection system for a vehicle provided herein may detect heat distress or potential heat stroke in a vehicle's occupant, particularly the driver, and initiate a response protocol. The response protocol may include a wellness check for the driver to confirm. Privacy settings may be overridden based on risk of heat distress and lack of responsiveness to a wellness check, and, in some circumstances a remote dispatcher may be authorized to enable a live streaming or real-time view.

A computer program product not covered by the claims may include a non-transitory computer-readable medium having instructions stored thereon, the instructions being executable by one or more processors configured to carry out any of the systems and/or methods described herein.

The various illustrative logical blocks, modules, circuits, and algorithm steps described in connection with the embodiments disclosed herein may be implemented as electronic hardware, computer software, or combinations of both. To illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system.

Embodiments implemented in computer software may be implemented in software, firmware, middleware, microcode, hardware description languages, or any combination thereof. A code segment or machine-executable instructions may represent a procedure, a function, a subprogram, a program, a routine, a subroutine, a module, a software package, a class, or any combination of instructions, data structures, or program statements. A code segment may be coupled to another code segment or a hardware circuit by passing and/or receiving information, data, arguments, parameters, or memory contents. Information, arguments, parameters, data, etc., may be passed, forwarded, or transmitted via any suitable means including memory sharing, message passing, token passing, network transmission, etc.

The actual software code or specialized control hardware used to implement these systems and methods does not limit the claimed features or this disclosure. Thus, the operation and behavior of the systems and methods were described without reference to the specific software code being understood that software and control hardware can be designed to implement the systems and methods based on the description herein.

When implemented in software, the functions may be stored as one or more instructions or code on a non-transitory computer-readable or processor-readable storage medium. The steps of a method or algorithm disclosed herein may be embodied in a processor-executable software module, which may reside on a computer-readable or processor-readable storage medium. A non-transitory computer-readable or processor-readable media includes both computer storage media and tangible storage media that facilitate transfer of a computer program from one place to another. A non-transitory processor-readable storage media may be any available media that may be accessed by a computer. By way of example, and not limitation, such non-transitory processor-readable media may comprise RAM, ROM, EEPROM, CD-ROM or other optical disk storage, magnetic disk storage or other magnetic storage devices, or any other tangible storage medium that may be used to store desired program code in the form of instructions or data structures and that may be accessed by a computer or processor. Disk and disc, as used herein, include compact disc (CD), laser disc, optical disc, digital versatile disc (DVD), floppy disk, and Blu-ray disc where disks usually reproduce data magnetically, while discs reproduce data optically with lasers. Combinations of the above should also be included within the scope of computer-readable media. Additionally, the operations of a method or algorithm may reside as one or any combination or set of codes and/or instructions on a non-transitory processor-readable medium and/or computer-readable medium, which may be incorporated into a computer program product.

The operations described in this specification can be implemented as operations performed by a data processing apparatus on data stored on one or more computer-readable storage devices or received from other sources.

The terms "data processing apparatus", "data processing system", "client device", "client computing device", "computing platform", "computing device", "computing system", "user device", or "device" can encompass all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA or an ASIC. The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

Processors suitable for the execution of a computer program include, by way of example, both general and special purpose microprocessors, and any one or more processors of any kind of digital computer. Generally, a processor will receive instructions and data from a read-only memory or a random access memory or both. The elements of a computer include a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a GPS receiver, a digital camera device, a video camera device, or a portable storage device (e.g., a universal serial bus (USB) flash drive), for example. The processor and the memory can be supplemented by, or incorporated in, special purpose logic circuitry.

To provide for interaction with a user, implementations of the subject matter described in this specification can be implemented on a computer having a display device, e.g., a CRT (cathode ray tube), plasma, or LCD monitor, for displaying information to the user; a keyboard; and a pointing device, e.g., a mouse, a trackball, or a touchscreen, by which the user can provide input to the computer. Other kinds of devices can be used to provide for interaction with a user as well; for example, feedback provided to the user can include any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user.

In certain circumstances, multitasking and parallel processing systems may be advantageous. Moreover, the separation of various system components in the implementations described above should not be understood as requiring such separation in all implementations, and it should be understood that the described program components and systems can generally be integrated together in a single software product or packaged into multiple software products. For example, the computing devices described herein can each be a single module, a logic device having one or more processing modules, one or more servers, or an embedded computing device.

Having now described some illustrative implementations and implementations, it is apparent that the foregoing is illustrative and not limiting, having been presented by way of example. In particular, although many of the examples presented herein involve specific combinations of method acts or system elements, those acts and those elements may be combined in other ways to accomplish the same objectives. Acts, elements, and features discussed only in connection with one implementation are not intended to be excluded from a similar role in other implementations or implementations.

The phraseology and terminology used herein is for the purpose of description and should not be regarded as limiting. The use of "including," "comprising," "having," "containing," "involving," "characterized by," "characterized in that," and variations thereof herein, is meant to encompass the items listed thereafter, equivalents thereof, and additional items, as well as alternate implementations consisting of the items listed thereafter exclusively. In one implementation, the systems and methods described herein consist of one, each combination of more than one, or all of the described elements, acts, or components.

Any references to implementations or elements or acts of the systems and methods herein referred to in the singular may also embrace implementations including a plurality of these elements, and any references in plural to any implementation or element or act herein may also embrace implementations including only a single element. References in the singular or plural form are not intended to limit the presently disclosed systems or methods, their components, acts, or elements to single or plural configurations. References to any act or element being based on any information, act, or element may include implementations where the act or element is based at least in part on any information, act, or element.

Any implementation disclosed herein may be combined with any other implementation, and references to "an implementation," "some implementations," "an alternate implementation," "various implementation," "one implementation," or the like are not necessarily mutually exclusive and are intended to indicate that a particular feature, structure, or characteristic described in connection with the implementation may be included in at least one implementation. Such terms as used herein are not necessarily all referring to the same implementation. Any implementation may be combined with any other implementation, inclusively or exclusively, in any manner consistent with the aspects and implementations disclosed herein.

References to "or" may be construed as inclusive so that any terms described using "or" may indicate any of a single, more than one, and all of the described terms.

Where technical features in the drawings, detailed description or any claim are followed by reference signs, the reference signs have been included for the sole purpose of increasing the intelligibility of the drawings, detailed description, and claims. Accordingly, neither the reference signs nor their absence have any limiting effect on the scope of any claim elements.

## Claims

1. A method for in-vehicle thermal distress mitigation, comprising:
monitoring (202), by one or more processors using one or more temperature sensors (172), an in-vehicle temperature of a vehicle (110);
receiving (204), by the one or more processors from a camera (125) mounted to or in the vehicle, one or more images (302, 304, 306) of an environment within the vehicle depicting a driver of the vehicle;
responsive to determining (206) the in-vehicle temperature of the vehicle satisfies a temperature threshold, executing (208), by the one or more processors, a machine learning model (140) using at least the one or more images to detect the driver is in a thermal distress state;
responsive to determining (210) the driver is in the thermal distress state, generating (212), by the one or more processors, a message in the vehicle requesting driver input; and
when no affirmative response to the message is received (214) within a defined time period subsequent to the generation of the message, generating (216), by the one or more processors, a real-time video feed depicting the driver for transmission to a remote computing system (115).

2. The method of claim 1, further comprising:
determining, by the one or more processors, the vehicle is occupied, optionally using one or more occupancy sensors (127),
wherein executing the machine learning model using the one or more images is further responsive to determining the vehicle is occupied.

3. The method of claim 1, further comprising:
determining, by the one or more processors, the vehicle (110) has been stationary for at least a defined duration,
wherein executing the machine learning model (140) using the one or more images is further responsive to determining the vehicle (110) has been stationary for at least the defined duration.

4. The method of claim 3, further comprising:
determining, by the one or more processors, the vehicle (110) is occupied,
wherein executing the machine learning model (140) using the one or more images is further responsive to determining the vehicle (110) is occupied and determining the vehicle has been stationary for at least the defined duration.

5. The method of claim 1, wherein executing the machine learning model (140) using at least the one or more images to detect the driver is in the thermal distress state comprises:
generating, by the one or more processors using the machine learning model (140), a confidence score indicating a likelihood that the driver is in the thermal distress state; and
determining, by the one or more processors, the confidence score satisfies a threshold.

6. The method of claim 1, further comprising:
detecting, by the one or more processors, one or more driver actions over a time period prior to determining the in-vehicle temperature exceeds the temperature threshold,
wherein executing the machine learning model (140) using the one or more images comprises executing, by the one or more processors, the machine learning model using the one or more images and identifications of the one or more driver actions over the time period to detect the driver is in the thermal distress state.

7. The method of claim 6, wherein detecting the one or more driver actions over the time period comprises detecting the driver taking a drink of a liquid and the driver exiting and reentering the vehicle (110),
wherein executing the machine learning model (140) using the one or more images comprises executing, by the one or more processors, the machine learning model using the one or more images and identifications of a number of instances in which the driver exited and reentered the vehicle within the time period and a number of instances in which the driver drank a liquid within the time period to detect the driver is in the thermal distress state.

8. The method of claim 1, further comprising:
detecting, by the one or more processors, a change in state of the vehicle (110) from a mobile state to a stationary state,
wherein executing the machine learning model (140) using the one or more images comprises executing, by the one or more processors, the machine learning model using the one or more images and an identification of the change in state of the vehicle from the mobile state to the stationary state to detect the driver is in the thermal distress state.

9. The method of claim 1, further comprising:
detecting, by the one or more processors, an outside air temperature,
wherein executing the machine learning model (140) using the one or more images comprises executing, by the one or more processors, the machine learning model using the one or more images and the outside air temperature to detect the driver is in the thermal distress state.

10. The method of claim 1, further comprising:
responsive to determining the in-vehicle temperature of the vehicle (110) satisfies the temperature threshold, detecting, by the one or more processors, a state of one or more devices within the vehicle,
wherein executing the machine learning model (140) using the one or more images comprises executing, by the one or more processors, the machine learning model using the one or more images and the state of the one or more devices within the vehicle; and optionally
wherein detecting the state of the one or more devices within the vehicle (110) comprises detecting an opening state of one or more windows within the vehicle or an activation state of an air conditioning system within the vehicle,
wherein executing the machine learning model (140) using the one or more images comprises executing, by the one or more processors, the machine learning model using the one or more images and the opening state of the one or more windows and the activation state of the air conditioning system.

11. The method of claim 1, wherein generating (212) the message comprises:
selecting, by the one or more processors, a pre-recorded audio message from a memory and
playing, by the one or more processors, the pre-recorded audio message through a speaker of the vehicle (110).

12. The method of claim 1, wherein receiving the one or more images comprises receiving, by the one or more processors, a sequence of images depicting the driver over time or a facial expression of the driver,
wherein executing the machine learning model (140) using the one or more images comprises executing, by the one or more processors, the machine learning model (140) using the one or more images based on a change in pose of the driver over the sequence of images or based on the depicted facial expression of the driver respectively.

13. The method of claim 1, wherein executing the machine learning model (140) using the one or more images comprises executing, by the one or more processors, the machine learning model using the one or more images generated prior to the generation of the message.

14. The method of claim 1, further comprising:
receiving, by the one or more processors from the camera mounted to or in the vehicle (110), second one or more images of the environment within the vehicle (110) depicting the driver of the vehicle (110);
responsive to determining a second in-vehicle temperature of the vehicle (110) satisfies the temperature threshold, executing, by the one or more processors, the machine learning model (140) using at least the one or more second images to detect the driver is in the thermal distress state;
responsive to determining the driver is in the thermal distress state, generating, by the one or more processors, a second message in the vehicle (110) requesting driver input;
detecting, by the one or more processors, the requested driver input; and
pausing, by the one or more processors, monitoring of the in-vehicle temperature for a second defined time period before initiating monitoring the in-vehicle temperature again.

15. A system (105) for in-vehicle thermal distress mitigation, comprising:
one or more processors configured by instructions stored in memory (135) to perform the method of any of claims 1 to 14.

## Patentansprüche

1. Verfahren zur Minderung eines thermischen Notstands in einem Fahrzeug, umfassend:
Überwachen (202), durch einen oder mehrere Prozessoren unter Verwendung eines oder mehrerer Temperatursensoren (172), einer Innenraumtemperatur eines Fahrzeugs (110);
Empfangen (204), durch den einen oder die mehreren Prozessoren von einer Kamera (125), die an oder in dem Fahrzeug montiert ist, eines oder mehrerer Bilder (302, 304, 306) einer Umgebung innerhalb des Fahrzeugs, die einen Fahrer des Fahrzeugs darstellen;
ansprechend auf das Bestimmen (206), dass die Innenraumtemperatur des Fahrzeugs eine Temperaturschwelle erfüllt, Ausführen (208), durch den einen oder die mehreren Prozessoren, eines Modells für maschinelles Lernen (140) unter Verwendung zumindest des einen oder der mehreren Bilder, um zu detektieren, dass sich der Fahrer in einem Zustand eines thermischen Notstands befindet;
ansprechend auf das Bestimmen (210), dass sich der Fahrer in dem Zustand eines thermischen Notstands befindet, Erzeugen (212), durch den einen oder die mehreren Prozessoren, einer Nachricht in dem Fahrzeug, die Fahrereingabe anfordert; und
wenn keine bejahende Antwort auf die Nachricht innerhalb eines definierten Zeitraums nach dem Erzeugen der Nachricht empfangen wird (214), Erzeugen (216), durch den einen oder die mehreren Prozessoren, einer Videoübertragung in Echtzeit, die den Fahrer darstellt, zur Übertragung an ein entferntes Rechensystem (115).

2. Verfahren nach Anspruch 1, weiter umfassend:
Bestimmen, durch den einen oder die mehreren Prozessoren, dass das Fahrzeug belegt ist, wahlweise unter Verwendung eines oder mehrerer Belegungssensoren (127),
wobei das Ausführen des Modells für maschinelles Lernen unter Verwendung des einen oder der mehreren Bilder weiter ansprechend auf das Bestimmen ist, dass das Fahrzeug belegt ist.

3. Verfahren nach Anspruch 1, weiter umfassend:
Bestimmen, durch den einen oder die mehreren Prozessoren, dass das Fahrzeug (110) sich für zumindest eine definierte Dauer in einem stationären Zustand befunden hat,
wobei das Ausführen des Modells für maschinelles Lernen (140) unter Verwendung des einen oder der mehreren Bilder weiter ansprechend auf das Bestimmen ist, dass das Fahrzeug (110) sich für zumindest die definierte Dauer in einem stationären Zustand befunden hat.

4. Verfahren nach Anspruch 3, weiter umfassend:
Bestimmen, durch den einen oder die mehreren Prozessoren, dass das Fahrzeug (110) belegt ist,
wobei das Ausführen des Modells für maschinelles Lernen (140) unter Verwendung des einen oder der mehreren Bilder weiter ansprechend auf das Bestimmen ist, dass das Fahrzeug (110) belegt ist, und das Bestimmen, dass das Fahrzeug sich für zumindest die definierte Dauer in einem stationären Zustand befunden hat.

5. Verfahren nach Anspruch 1, wobei das Ausführen des Modells für maschinelles Lernen (140) unter Verwendung zumindest des einen oder der mehreren Bilder, um zu detektieren, dass sich der Fahrer in dem Zustand eines thermischen Notstands befindet, umfasst:
Erzeugen, durch den einen oder die mehreren Prozessoren unter Verwendung des Modells für maschinelles Lernen (140), eines Konfidenzwerts, der eine Wahrscheinlichkeit angibt, dass sich der Fahrer in dem Zustand eines thermischen Notstands befindet; und
Bestimmen, durch den einen oder die mehreren Prozessoren, dass der Konfidenzwert eine Schwelle erfüllt.

6. Verfahren nach Anspruch 1, weiter umfassend:
Detektieren, durch den einen oder die mehreren Prozessoren, einer oder mehrerer Fahreraktionen über einen Zeitraum vor dem Bestimmen, dass die Innenraumtemperatur des Fahrzeugs die Temperaturschwelle überschreitet,
wobei das Ausführen des Modells für maschinelles Lernen (140) unter Verwendung des einen oder der mehreren Bilder das Ausführen, durch den einen oder die mehreren Prozessoren, des Modells für maschinelles Lernen unter Verwendung des einen oder der mehreren Bilder und Identifizierungen der einen oder mehreren Fahreraktionen über den Zeitraum umfasst, um zu detektieren, dass sich der Fahrer in dem Zustand eines thermischen Notstands befindet.

7. Verfahren nach Anspruch 6, wobei das Detektieren der einen oder mehreren Fahreraktionen über den Zeitraum das Detektieren umfasst, dass der Fahrer einen Schluck einer Flüssigkeit nimmt und der Fahrer das Fahrzeug (110) verlässt und wieder betritt,
wobei das Ausführen des Modells für maschinelles Lernen (140) unter Verwendung des einen oder der mehreren Bilder das Ausführen, durch den einen oder die mehreren Prozessoren, des Modells für maschinelles Lernen unter Verwendung des einen oder der mehreren Bilder und Identifizierungen einer Anzahl von Instanzen, in denen der Fahrer das Fahrzeug innerhalb des Zeitraums verlassen und wieder betreten hat, und einer Anzahl von Instanzen, in denen der Fahrer innerhalb des Zeitraums eine Flüssigkeit getrunken hat, umfasst, um zu detektieren, dass sich der Fahrer in dem Zustand eines thermischen Notstands befindet.

8. Verfahren nach Anspruch 1, weiter umfassend:
Detektieren, durch den einen oder die mehreren Prozessoren, einer Zustandsänderung des Fahrzeugs (110) von einem mobilen Zustand in einen stationären Zustand,
wobei das Ausführen des Modells für maschinelles Lernen (140) unter Verwendung des einen oder der mehreren Bilder das Ausführen, durch den einen oder die mehreren Prozessoren, des Modells für maschinelles Lernen unter Verwendung des einen oder der mehreren Bilder und einer Identifizierung der Zustandsänderung des Fahrzeugs von dem mobilen Zustand in den stationären Zustand umfasst, um zu detektieren, dass sich der Fahrer in dem Zustand eines thermischen Notstands befindet.

9. Verfahren nach Anspruch 1, weiter umfassend:
Detektieren, durch den einen oder die mehreren Prozessoren, einer Außentemperatur,
wobei das Ausführen des Modells für maschinelles Lernen (140) unter Verwendung des einen oder der mehreren Bilder das Ausführen, durch den einen oder die mehreren Prozessoren, des Modells für maschinelles Lernen unter Verwendung des einen oder der mehreren Bilder und der Außentemperatur umfasst, um zu detektieren, dass sich der Fahrer in dem Zustand eines thermischen Notstands befindet.

10. Verfahren nach Anspruch 1, weiter umfassend:
ansprechend auf das Bestimmen, dass die Innenraumtemperatur des Fahrzeugs (110) die Temperaturschwelle erfüllt, Detektieren, durch den einen oder die mehreren Prozessoren, eines Zustands einer oder mehrerer Vorrichtungen innerhalb des Fahrzeugs,
wobei das Ausführen des Modells für maschinelles Lernen (140) unter Verwendung des einen oder der mehreren Bilder das Ausführen, durch den einen oder die mehreren Prozessoren, des Modells für maschinelles Lernen unter Verwendung des einen oder der mehreren Bilder und des Zustands der einen oder mehreren Vorrichtungen innerhalb des Fahrzeugs umfasst; und wahlweise
wobei das Detektieren des Zustands der einen oder mehreren Vorrichtungen innerhalb des Fahrzeugs (110) das Detektieren eines Öffnungszustands eines oder mehrerer Fenster innerhalb des Fahrzeugs oder eines Aktivierungszustands eines Klimaanlagensystems innerhalb des Fahrzeugs umfasst,
wobei das Ausführen des Modells für maschinelles Lernen (140) unter Verwendung des einen oder der mehreren Bilder das Ausführen, durch den einen oder die mehreren Prozessoren, des Modells für maschinelles Lernen unter Verwendung des einen oder der mehreren Bilder und des Öffnungszustands des einen oder der mehreren Fenster und des Aktivierungszustands des Klimaanlagensystems umfasst.

11. Verfahren nach Anspruch 1, wobei das Erzeugen (212) der Nachricht umfasst:
Auswählen, durch den einen oder die mehreren Prozessoren, einer voraufgezeichneten Audionachricht aus einem Speicher; und
Wiedergeben, durch den einen oder die mehreren Prozessoren, der voraufgezeichneten Audionachricht über einen Lautsprecher des Fahrzeugs (110).

12. Verfahren nach Anspruch 1, wobei das Empfangen des einen oder der mehreren Bilder das Empfangen, durch den einen oder die mehreren Prozessoren, einer Bildsequenz, die den Fahrer oder einen Gesichtsausdruck des Fahrers über die Zeit darstellt, umfasst,
wobei das Ausführen des Modells für maschinelles Lernen (140) unter Verwendung des einen oder der mehreren Bilder das Ausführen, durch den einen oder die mehreren Prozessoren, des Modells für maschinelles Lernen (140) unter Verwendung des einen oder der mehreren Bilder basierend auf einer Änderung der Körperhaltung des Fahrers über die Bildsequenz bzw. basierend auf dem dargestellten Gesichtsausdruck des Fahrers umfasst.

13. Verfahren nach Anspruch 1, wobei das Ausführen des Modells für maschinelles Lernen (140) unter Verwendung des einen oder der mehreren Bilder das Ausführen, durch den einen oder die mehreren Prozessoren, des Modells für maschinelles Lernen unter Verwendung des einen oder der mehreren Bilder umfasst, die vor dem Erzeugen der Nachricht erzeugt wurden.

14. Verfahren nach Anspruch 1, weiter umfassend:
Empfangen, durch den einen oder die mehreren Prozessoren von der an oder in dem Fahrzeug (110) montierten Kamera, eines oder mehrerer zweiter Bilder der Umgebung innerhalb des Fahrzeugs (110), die den Fahrer des Fahrzeugs (110) darstellen;
ansprechend auf das Bestimmen, dass eine zweite Innenraumtemperatur des Fahrzeugs (110) die Temperaturschwelle erfüllt, Ausführen, durch den einen oder die mehreren Prozessoren, des Modells für maschinelles Lernen (140) unter Verwendung zumindest des einen oder der mehreren zweiten Bilder, um zu detektieren, dass sich der Fahrer in dem Zustand eines thermischen Notstands befindet;
ansprechend auf das Bestimmen, dass sich der Fahrer in dem Zustand eines thermischen Notstands befindet, Erzeugen, durch den einen oder die mehreren Prozessoren, einer zweiten Nachricht in dem Fahrzeug (110), die eine Fahrereingabe anfordert;
Detektieren, durch den einen oder die mehreren Prozessoren, der angeforderten Fahrereingabe; und
Pausieren, durch den einen oder die mehreren Prozessoren, des Überwachens der Innenraumtemperatur des Fahrzeugs für einen zweiten definierten Zeitraum, bevor das Überwachen der Innenraumtemperatur des Fahrzeugs erneut eingeleitet wird.

15. System (105) zur Minderung eines thermischen Notstands in einem Fahrzeug, umfassend:
einen oder mehrere Prozessoren, die durch in einem Speicher (135) gespeicherte Anweisungen ausgebildet sind, das Verfahren nach einem der Ansprüche 1 bis 14 durchzuführen.

## Revendications

1. Procédé d'atténuation de détresse thermique dans un véhicule, comprenant :
une surveillance (202), par un ou plusieurs processeurs utilisant un ou plusieurs capteurs de température (172), d'une température intérieure d'un véhicule (110) ;
une réception (204), par le ou les processeurs en provenance d'une caméra (125) montée sur ou dans le véhicule, d'une ou plusieurs images (302, 304, 306) d'un environnement au sein du véhicule représentant un conducteur du véhicule ;
en réponse à une détermination (206) que la température intérieure du véhicule satisfait un seuil de température, une exécution (208), par le ou les processeurs, d'un modèle d'apprentissage automatique (140) en utilisant au moins la ou les images pour détecter que le conducteur est dans un état de détresse thermique ;
en réponse à une détermination (210) que le conducteur est dans l'état de détresse thermique, une génération (212), par le ou les processeurs, d'un message dans le véhicule demandant une entrée du conducteur ; et
lorsqu'aucune réponse affirmative au message n'est reçue (214) dans une période de temps définie postérieure à la génération du message, une génération (216), par le ou les processeurs, d'un flux vidéo en temps réel représentant le conducteur pour transmission à un système informatique distant (115).

2. Procédé selon la revendication 1, comprenant en outre :
une détermination, par le ou les processeurs, que le véhicule est occupé, facultativement en utilisant un ou plusieurs capteurs d'occupation (127),
dans lequel l'exécution du modèle d'apprentissage automatique en utilisant la ou les images dépend en outre de la détermination que le véhicule est occupé.

3. Procédé selon la revendication 1, comprenant en outre :
une détermination, par le ou les processeurs, que le véhicule (110) a été stationnaire pendant au moins une durée définie,
dans lequel l'exécution du modèle d'apprentissage automatique (140) en utilisant la ou les images se fait en outre en réponse à la détermination que le véhicule (110) a été stationnaire pendant au moins la durée définie.

4. Procédé selon la revendication 3, comprenant en outre :
une détermination, par le ou les processeurs, que le véhicule (110) est occupé,
dans lequel l'exécution du modèle d'apprentissage automatique (140) en utilisant la ou les images se fait en outre en réponse à la détermination que le véhicule (110) est occupé et à la détermination que le véhicule a été stationnaire pendant au moins la durée définie.

5. Procédé selon la revendication 1, dans lequel l'exécution du modèle d'apprentissage automatique (140) en utilisant au moins la ou les images pour détecter que le conducteur est dans l'état de détresse thermique comprend :
une génération, par le ou les processeurs en utilisant le modèle d'apprentissage automatique (140), d'un score de confiance indiquant une probabilité que le conducteur soit dans l'état de détresse thermique ; et
une détermination, par le ou les processeurs, que le score de confiance satisfait un seuil.

6. Procédé selon la revendication 1, comprenant en outre :
une détection, par le ou les processeurs, d'une ou plusieurs actions du conducteur sur une période de temps antérieure à la détermination que la température intérieure du véhicule dépasse le seuil de température,
dans lequel l'exécution du modèle d'apprentissage automatique (140) en utilisant la ou les images comprend une exécution, par le ou les processeurs, du modèle d'apprentissage automatique en utilisant la ou les images et des identifications de la ou des actions du conducteur sur la période de temps pour détecter que le conducteur est dans l'état de détresse thermique.

7. Procédé selon la revendication 6, dans lequel la détection de la ou des actions du conducteur sur la période de temps comprend une détection du conducteur prenant une boisson d'un liquide et du conducteur sortant du véhicule (110) et y rentrant à nouveau,
dans lequel l'exécution du modèle d'apprentissage automatique (140) en utilisant la ou les images comprend une exécution, par le ou les processeurs, du modèle d'apprentissage automatique en utilisant la ou les images et des identifications d'un nombre d'instances dans lesquelles le conducteur est sorti du véhicule et y est rentré à nouveau dans la période de temps et d'un nombre d'instances dans lesquelles le conducteur a bu un liquide dans la période de temps pour détecter que le conducteur est dans l'état de détresse thermique.

8. Procédé selon la revendication 1, comprenant en outre :
une détection, par le ou les processeurs, d'un changement d'état du véhicule (110) depuis un état mobile vers un état stationnaire,
dans lequel l'exécution du modèle d'apprentissage automatique (140) en utilisant la ou les images comprend une exécution, par le ou les processeurs, du modèle d'apprentissage automatique en utilisant la ou les images et une identification du changement d'état du véhicule depuis l'état mobile vers l'état stationnaire pour détecter que le conducteur est dans l'état de détresse thermique.

9. Procédé selon la revendication 1, comprenant en outre :
une détection, par le ou les processeurs, d'une température de l'air extérieur,
dans lequel l'exécution du modèle d'apprentissage automatique (140) en utilisant la ou les images comprend une exécution, par le ou les processeurs, du modèle d'apprentissage automatique en utilisant la ou les images et la température de l'air extérieur pour détecter que le conducteur est dans l'état de détresse thermique.

10. Procédé selon la revendication 1, comprenant en outre :
en réponse à la détermination que la température intérieure du véhicule (110) satisfait le seuil de température, une détection, par le ou les processeurs, d'un état d'un ou plusieurs dispositifs au sein du véhicule,
dans lequel l'exécution du modèle d'apprentissage automatique (140) en utilisant la ou les images comprend une exécution, par le ou les processeurs, du modèle d'apprentissage automatique en utilisant la ou les images et l'état du ou des dispositifs au sein du véhicule ; et facultativement
dans lequel la détection de l'état du ou des dispositifs au sein du véhicule (110) comprend une détection d'un état d'ouverture d'une ou plusieurs fenêtres au sein du véhicule ou d'un état d'activation d'un système de climatisation au sein du véhicule,
dans lequel l'exécution du modèle d'apprentissage automatique (140) en utilisant la ou les images comprend une exécution, par le ou les processeurs, du modèle d'apprentissage automatique en utilisant la ou les images et l'état d'ouverture de la ou des fenêtres et l'état d'activation du système de climatisation.

11. Procédé selon la revendication 1, dans lequel la génération (212) du message comprend :
une sélection, par le ou les processeurs, d'un message audio préenregistré à partir d'une mémoire ; et
une lecture, par le ou les processeurs, du message audio préenregistré via un haut-parleur du véhicule (110).

12. Procédé selon la revendication 1, dans lequel la réception de la ou des images comprend une réception, par le ou les processeurs, d'une séquence d'images représentant le conducteur au cours du temps ou d'une expression faciale du conducteur,
dans lequel l'exécution du modèle d'apprentissage automatique (140) en utilisant la ou les images comprend une exécution, par le ou les processeurs, du modèle d'apprentissage automatique (140) en utilisant la ou les images sur la base d'un changement de pose du conducteur au cours de la séquence d'images ou sur la base de l'expression faciale représentée du conducteur respectivement.

13. Procédé selon la revendication 1, dans lequel l'exécution du modèle d'apprentissage automatique (140) en utilisant la ou les images comprend une exécution, par le ou les processeurs, du modèle d'apprentissage automatique en utilisant la ou les images générées antérieurement à la génération du message.

14. Procédé selon la revendication 1, comprenant en outre :
une réception, par le ou les processeurs en provenance de la caméra montée sur ou dans le véhicule (110), d'une ou plusieurs deuxièmes images de l'environnement au sein du véhicule (110) représentant le conducteur du véhicule (110) ;
en réponse à la détermination qu'une deuxième température intérieure du véhicule (110) satisfait le seuil de température, une exécution, par le ou les processeurs, du modèle d'apprentissage automatique (140) en utilisant au moins la ou les deuxièmes images pour détecter que le conducteur est dans l'état de détresse thermique ;
en réponse à la détermination que le conducteur est dans l'état de détresse thermique, une génération, par le ou les processeurs, d'un deuxième message dans le véhicule (110) demandant une entrée du conducteur ;
une détection, par le ou les processeurs, de l'entrée du conducteur demandée ; et
une mise en pause, par le ou les processeurs, de la surveillance de la température intérieure du véhicule pendant une deuxième période de temps définie avant d'initier la surveillance de la température intérieure du véhicule à nouveau.

15. Système (105) d'atténuation de détresse thermique dans un véhicule, comprenant :
un ou plusieurs processeurs configurés par des instructions stockées dans une mémoire (135) pour effectuer le procédé selon l'une quelconque des revendications 1 à 14.
